(19) Europäisches Patentamt
European Patent Office
Office européen des brevets

(11) **EP 4 086 110 A1**

(12) **EUROPEAN PATENT APPLICATION**

(43) Date of publication:
**09.11.2022 Bulletin 2022/45**

(21) Application number: **21204706.2**

(22) Date of filing: **26.10.2021**

(51) International Patent Classification (IPC):
***B60L 53/62*** *(2019.01)* ***B60L 58/27*** *(2019.01)*

(52) Cooperative Patent Classification (CPC):
**B60L 53/62; B60L 58/27;** B60L 2250/16; Y02T 10/70; Y02T 10/7072; Y02T 90/12

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.07.2021 CN 202110757562**

(71) Applicant: **GUANGZHOU XIAOPENG MOTORS TECHNOLOGY CO., LTD.**
**Guangzhou (CN)**

(72) Inventor: **SHE, LiYang**
**Guangzhou (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **METHOD AND APPARATUS FOR CALCULATING REMAINING TIME OF FAST BATTERY CHARGING, VEHICLE, AND STORAGE MEDIUM**

(57) A method and apparatus for calculating a remaining time of fast charging, a vehicle, and a storage medium are provided. The method includes: obtaining a present temperature of a battery; obtaining a remaining charging time for the battery according to a preset current MAP table and the present temperature when the present temperature is within a first temperature range; obtaining a calibrated cooling/heating time and a target charging time, and summing the calibrated cooling/heating time and the target charging time, to obtain the remaining charging time for the battery when the present temperature is not within the first temperature range, where the calibrated cooling time is obtained from a cooling time table, the calibrated heating time is obtained from a heating time table, and the target charging time is obtained according to a first temperature or a second temperature and the current MAP table.

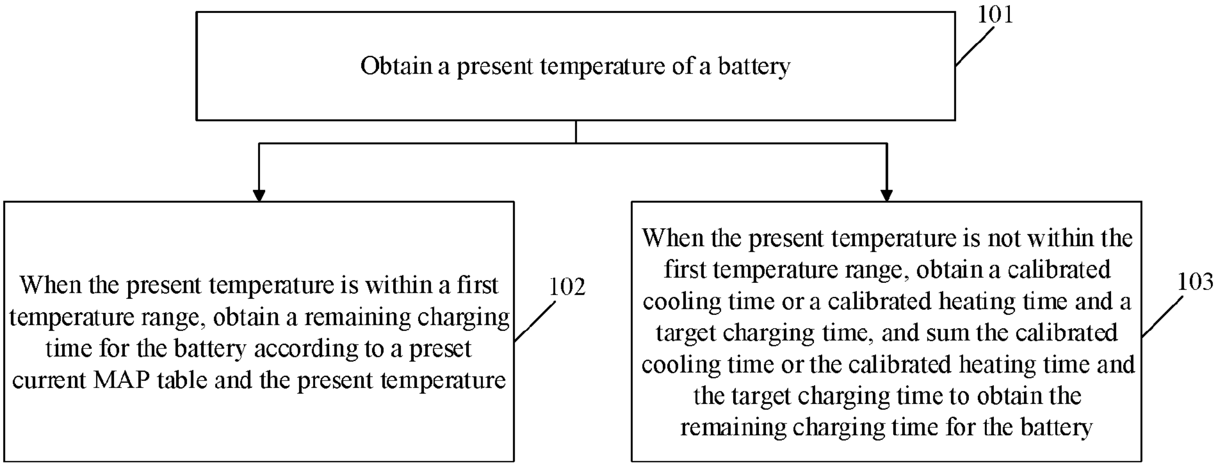


FIG. 1

EP 4 086 110 A1

## Description

### TECHNICAL FIELD

The present invention relates to the technical field of traction batteries, and in particular, to a method and apparatus for calculating a remaining time of fast charging, a vehicle, and a storage medium.

### BACKGROUND

Electric automobiles have attracted more and more attention for the benefits of environmental protection and energy saving. With the continuous progress of corresponding technologies and the support of national policies, electric automobiles have gradually become popular. In future, competition among electric automobiles is not only focused on quality of automobile products, but also on user experience and satisfaction in the process of using the automobiles. Accuracy of displaying a remaining charging time on a dashboard is an important user experience parameter of fast charging of the electric automobiles.

A common method for calculating the remaining charging time in the market only relies on a MAP table, in which a charging path needs to be pre-estimated and a change in the charge on the charging path needs to be predicted. Pre-estimation of the charging path is relatively difficult, and errors in the prediction of changes in the charge are often inevitable. In addition, an excessively high or excessively low temperature may also affect batteries and directly affect the calculation of the remaining charging time. It can be appreciated that the various influencing factors in the above-mentioned conventional method for calculating the remaining charging time according to the MAP table may reduce calculation accuracy for the remaining charging time.

### SUMMARY

Embodiments of the present invention provide a method and apparatus for calculating a remaining time of fast battery charging, a vehicle, and a storage medium, which are used to improve calculation accuracy of a remaining charging time.

A first aspect of the embodiments of the present invention provides a method for calculating a remaining time of fast charging, which includes:

obtaining a present temperature of a battery;
when the present temperature is within a first temperature range, obtaining a remaining charging time for the battery according to a preset current MAP table and the present temperature;
when the present temperature is not within the first temperature range, obtaining a calibrated cooling/heating time and a target charging time, and summing the calibrated/heating cooling time and the target charging time to obtain the remaining charging time for the battery, wherein
the calibrated cooling time is obtained from a preset cooling time table and is a time required to cool the battery from the present temperature to a first temperature within the first temperature range, the calibrated heating time is obtained from a preset heating time table and is a time required to heat the battery from the present temperature to a second temperature within the first temperature range, and the target charging time is obtained according to the first temperature or the second temperature and the current MAP table.

In some optional implementations, said step of when the present temperature is not within the first temperature range, obtaining a calibrated/heating cooling time and a target charging time, and summing the calibrated cooling/heating time and the target charging time to obtain the remaining charging time for the battery includes:

when the present temperature is within a second temperature range, looking up the cooling time table according to the present temperature for the calibrated cooling time required to cool the battery from the present temperature to the first temperature, obtaining, based on the first temperature and the current MAP table, a first target charging time required after the battery is cooled from the present temperature to the first temperature, and summing the first target charging time and the calibrated cooling time to obtain the remaining charging time for the battery, wherein a minimum temperature of the second temperature range is greater than a maximum temperature of the first temperature range; or
when the present temperature is within a third temperature range, looking up the heating time table according to the present temperature for the calibrated heating time required to heat the battery from the present temperature to the second temperature, obtaining, based on the second temperature and the current MAP table, a second target charging time required after the battery is heated from the present temperature to the second temperature, and

summing the second target charging time and the calibrated heating time to obtain the remaining charging time for the battery, wherein a maximum temperature of the third temperature range is less than a minimum temperature of the first temperature range.

In some optional implementations, the current MAP table includes N temperature blocks, M voltage blocks, and request currents corresponding to P unit blocks respectively, each of the temperature blocks includes at least one temperature interval, each of the voltage blocks includes at least one voltage interval, each of the unit blocks includes at least one unit interval, and request currents corresponding to all unit intervals in each of the unit blocks are equal, where P=N*M and N, M, and P are positive integers.

In some optional implementations, said step of when the present temperature is within a first temperature range, obtaining a remaining charging time for the battery according to a preset current MAP table and the present temperature includes:

when the present temperature is within the first temperature range, obtaining, from the current MAP table and based on the present temperature, request currents respectively corresponding to n voltage blocks that have been gone through during a rise from a present voltage of the battery to a corresponding voltage when charging completes to obtain n request currents, wherein n is a positive integer;
obtaining state of charge, SOC, variation amounts respectively corresponding to the n voltage blocks, to obtain n SOC variation amounts; and
obtaining the remaining charging time for the battery based on the n SOC variation amounts, the n request currents, a charging pile output current of the battery, an average current, and a rated capacity of the battery, where the average current is an actual current of the battery.

In some optional implementations, said obtaining the remaining charging time for the battery based on the n SOC variation amounts, the n request currents, a charging pile output current, an average current, and a rated capacity of the battery includes:

calculating a first present charging time based on an SOC variation amount corresponding to the 1$^{st}$ voltage block in the n voltage blocks, the rated capacity of the battery, the charging pile output current of the battery, the 1$^{st}$ request current in the n request currents, and the average current;
when n = 1, using the first present charging time as the remaining charging time for the battery; and
when $n \geq 2$, calculating an i$^{th}$ first subsequent charging time based on an SOC variation amount corresponding to the i$^{th}$ voltage block in the n voltage blocks, the rated capacity of the battery, the charging pile output current of the battery, and an i$^{th}$ request current in the n request currents, to obtain n-1 first subsequent charging times, wherein $2 \leq i \leq n$; and summing the first present charging time and the n-1 first subsequent charging times, to obtain the remaining charging time for the battery.

In some optional implementations, said obtaining, based on the first temperature and the current MAP table, a first target charging time required after the battery is cooled from the present temperature to the first temperature includes:

obtaining a first voltage of the battery when cooled from the present temperature to the first temperature and a cooling SOC variation amount during the cooling;
obtaining, from the current MAP table and based on the first temperature, request currents respectively corresponding to m voltage blocks that have been gone through during a rise from the first voltage to the corresponding voltage when charging completes, to obtain m request currents, where m is a positive integer;
obtaining SOC variation amounts respectively corresponding to the m voltage blocks, to obtain m SOC variation amounts; and
obtaining, based on the cooling SOC variation amount, the m SOC variation amounts, the m request currents, the charging pile output current of the battery, the average current, and the rated capacity of the battery, the first target charging time required after the battery is cooled from the present temperature to the first temperature.

In some optional implementations, said obtaining, based on the second temperature and the current MAP table, a second target charging time required after the battery is heated from the present temperature to the second temperature includes:

obtaining a second voltage of the battery when heated from the present temperature to the second temperature and a heating SOC variation amount during the heating;

obtaining, from the current MAP table and based on the second temperature, request currents respectively corresponding to p voltage blocks that have been gone through during a rise from the second voltage to the corresponding voltage when charging completes, to obtain p request currents, where p is a positive integer;
obtaining SOC variation amounts respectively corresponding to the p voltage blocks, to obtain p SOC variation amounts; and
obtaining, based on the heating SOC variation amount, the p SOC variation amounts, the p request currents, the charging pile output current of the battery, the average current, and the rated capacity of the battery, the second target charging time required after the battery is heated from the present temperature to the second temperature.

In some optional implementations, before obtaining a present temperature of a battery, the method further includes:
determining whether the battery meets a final-stage charging condition, wherein obtaining a present temperature of a battery includes:
obtaining the present temperature of the battery when the battery does not meet the final-stage charging condition.
In some optional implementations, the method includes obtaining a final-stage voltage follow-up time of the battery as the remaining charging time for the battery when the battery meets the final-stage charging condition.
In some optional implementations, said obtaining a final-stage voltage follow-up time of the battery as the remaining charging time for the battery when the battery meets the final-stage charging condition includes:

obtaining a real-time voltage of the battery when the battery meets the final-stage charging condition; and
looking up a voltage follow-up time table according to the real-time voltage, to obtain a final-stage voltage follow-up time as the remaining charging time for the battery, wherein the voltage follow-up time table includes correspondence between a voltage and a final-stage voltage follow-up time.

A second aspect of the embodiments of the present invention provides an apparatus for calculating a remaining time of fast charging, which may include:

a first obtaining module, configured to obtain a present temperature of a battery;
a second obtaining module, configured to, when the present temperature is within a first temperature range, obtain a remaining charging time for the battery according to a preset current MAP table and the present temperature; and
a third obtaining module, configured to, when the present temperature is not within the first temperature range, obtain a calibrated cooling/heating time and a target charging time, and sum the calibrated cooling/heating time and the target charging time to obtain the remaining charging time for the battery, wherein
the calibrated cooling time is obtained from a preset cooling time table and is a time required to cool the battery from the present temperature to a first temperature within the first temperature range, the calibrated heating time is obtained from a preset heating time table and is a time required to heat the battery from the present temperature to a second temperature within the first temperature range, and the target charging time is obtained according to the first temperature or the second temperature and the current MAP table.

A third aspect of the embodiments of the present invention provides a vehicle, which may include:

memory storing executable program code; and
a processor coupled to the memory, wherein
the processor is configured to execute the executable program code stored in the memory, to perform the method for calculating a remaining time of fast charging according the first aspect of the embodiments of the present invention.

A fourth aspect of the embodiments of the present invention provides a computer-readable storage medium having stored thereupon a computer program which, when executed by a processor, results in performance of the steps of any method according to the first aspect of the embodiments of the present invention.
A fifth aspect of the embodiments of the present invention provides a computer program product. The computer program product, when being run on a computer, enables the computer to perform some or all steps of any method according to the first aspect.
A sixth aspect of the embodiments of the present invention provides an application release platform, which is used to release a computer program product. The computer program product, when being run on a computer, enables the computer to perform some or all steps of any method according to the first aspect.
Compared with the prior art, the embodiments of the present invention have the following beneficial effects.
In the embodiments of the present invention, a present temperature of a battery is obtained; when the present temperature is within a first temperature range (at a normal temperature), a remaining charging time for the battery is

obtained according to a preset current MAP table and the present temperature; when the present temperature is not within the first temperature range (at a high temperature or a low temperature), a calibrated cooling/heating time and a target charging time (a remaining charging time required after the battery is recovered from the high temperature or the low temperature to the normal temperature) are obtained; and the calibrated cooling/heating time and the target charging time are summed to obtain the remaining charging time for the battery, where the calibrated cooling time is obtained from a preset cooling time table, the calibrated heating time is obtained from a preset heating time table, and the target charging time needs to be obtained according to a first temperature to be cooled to within the first temperature range (cooled to the normal temperature) or a second temperature to be heated to within the first temperature range (heated to the normal temperature) and the current MAP table. Hence, through the embodiments of the present invention, different methods for calculating a remaining charging time can be adopted according to different temperature intervals from the perspective of a full temperature interval of a battery cell, and influencing factors under different temperature intervals are comprehensively considered, which is helpful to improve calculation accuracy for the remaining charging time.

## BRIEF DESCRIPTION OF THE ACCOMPANYING DRAWINGS

In order to show the technical solutions of the present invention more clearly, the accompanying drawings of the embodiments will be briefly described below. Clearly, the accompanying drawings described below show only some embodiments of the present invention, from which other drawings may be obtained without creative efforts by a person of ordinary skill in the art.

FIG. 1 is a schematic flowchart of a method for calculating a remaining time of fast charging according to Embodiment 1 of the present invention;
FIG. 2 is a schematic flowchart of a method for calculating a remaining time of fast charging according to Embodiment 2 of the present invention;
FIG. 3 is a schematic flowchart of a method for calculating a remaining time of fast charging according to Embodiment 3 of the present invention;
FIG. 4 is a schematic flowchart of a method for calculating a remaining time of fast charging according to Embodiment 4 of the present invention;
FIG. 5 is a schematic flowchart of a method for calculating a remaining time of fast charging according to Embodiment 5 of the present invention;
FIG. 6 is a schematic structural diagram of an apparatus for calculating a remaining time of fast charging according to Embodiment 1 of the present invention;
FIG. 7 is a schematic structural diagram of an apparatus for calculating a remaining time of fast charging according to Embodiment 2 of the present invention;
FIG. 8 is a schematic structural diagram of an apparatus for calculating a remaining time of fast charging according to Embodiment 3 of the present invention;
FIG. 9 is a schematic structural diagram of a vehicle according to an embodiment of the present invention;
FIG. 10 is a schematic application diagram of an original MAP table according to an embodiment of the present invention; and
FIG. 11 is a schematic application diagram of a MAP table converted from the original MAP table in FIG. 10 according to an embodiment of the present invention.

## DESCRIPTION OF EMBODIMENTS

The following specification clearly and completely describes the technical solutions according to the embodiments of the present invention with reference to the accompanying drawings. The described embodiments are merely some rather than all possible embodiments of the present invention. Based on the embodiments in the present invention, all other embodiments obtainable by a person of ordinary skill in the art without creative efforts fall within the scope of protection of the present invention.

It is to be noted that the terms "first", "second", "third", "fourth", "fifth", "sixth", "seventh", "eighth" and "ninth" in the specification and claims of the present invention are used to distinguish between different objects and not to describe a specific order. The terms "comprise/include" and "have" and any variations thereof in the embodiments of the present invention are intended to cover relevant features non-exclusively. For example, a process, method, system, product, or device that includes a series of steps or units need not be limited to the steps or units that are explicitly listed, but may include other steps or units that are not explicitly listed or inherent to such processes, methods, products, or devices.

It is to be understood that the state of charge (SOC) of an electric automobile is a present charge state of a battery of the automobile, which is also referred as a remaining charge time of the battery of the electric automobile. Low-temperature charging may cause permanent damage to the battery of the automobile, and cause a severe lithium

plating phenomenon. Crystallization may pierce a diaphragm and cause short circuit inside the battery. Therefore, it is necessary to heat and charge batteries at low temperatures. However, an excessively high temperature of the battery of the automobile may cause fire and other dangerous situations, so it is necessary to charge and cool batteries at high temperatures.

Embodiments of the present invention provide a method and apparatus for calculating a remaining time of fast battery charging, a vehicle, and a storage medium, which are used from the perspective of a full temperature interval of a battery cell. Influencing factors for a remaining charging time under different temperature intervals are comprehensively considered, so as to adopt different calculation methods in different temperature intervals, thereby improving calculation accuracy for the remaining charging time.

The following part of the specification describes the technical solutions of the present invention in detail with reference to the specific embodiments.

FIG. 1 is a schematic flowchart of a method for calculating a remaining time of fast charging according to Embodiment 1 of the present invention. As shown in FIG. 1, the method for calculating a remaining time of fast charging may include the following steps.

101. Obtain a present temperature of a battery.

The present temperature is a present temperature of a battery cell.

102. When the present temperature is within a first temperature range, obtain a remaining charging time for the battery according to a preset current MAP table and the present temperature.

For the preset current MAP table in the embodiment of the present invention, the current MAP table includes N temperature blocks, M voltage blocks, and request currents corresponding to P unit blocks respectively, each of the temperature blocks includes at least one temperature interval, each of the voltage blocks includes at least one voltage interval, each of the unit blocks includes at least one unit interval, and request currents corresponding to all unit intervals in each of the unit blocks are equal, where $P=N*M$ and N, M, and P are positive integers.

It is to be understood that the battery may be allowed to be charged within a preset temperature range T, for example, when the current temperature is higher than a first temperature threshold and lower than a second temperature threshold. For example, the preset temperature range may be -20°C-55°C. A temperature range of 20°C-35°C is generally used as a normal working temperature range of the battery (a safety factor of the battery is high within the temperature range), i.e., a normal temperature range. A temperature range of 35°C-55°C is a typical high temperature range, and a temperature range of -20°C-20°C is a typical low temperature range. Therefore, in the embodiment of the present invention, the present temperature range is set to be the first temperature range, which is the normal temperature range.

In some optional implementations, after the present temperature of the battery is obtained in step 101, it is determined whether the present temperature is within the preset temperature range. If the present temperature is within the preset temperature range, it is further determined whether the present temperature is within the first temperature range. If the present temperature is within the first temperature range, step 102 is performed. If the present temperature is not within the first temperature range, step 103 is performed. If the present temperature is not within the preset temperature range, it is determined that the battery is in a temperature environment in which charging is not allowed, and the battery is prohibited from charging. Through the implementation, the battery can be prohibited from charging at excessively high or excessively low temperatures, thereby improving charging safety.

In the embodiment of the present invention, when the present temperature of the battery is within the normal temperature range, the remaining charging time for the battery is calculated according to the present temperature and the current MAP table, and the remaining charging time can be quickly calculated by using the current MAP table.

103. When the present temperature is not within the first temperature range, obtain a calibrated cooling/heating time and a target charging time, and sum the calibrated cooling/heating time the target charging time to obtain the remaining charging time for the battery.

The calibrated cooling time is obtained from a preset cooling time table and is a time required to cool the battery from the present temperature to a first temperature within the first temperature range, the calibrated heating time is obtained from a preset heating time table and is a time required to heat the battery from the present temperature to a second temperature within the first temperature range, and the target charging time is obtained according to the first temperature or the second temperature and the current MAP table.

When the present temperature is not within the first temperature range, it indicates that the present temperature is either a high temperature, i.e., higher than a normal temperature at which the battery operates normally and lower than a second temperature threshold of the preset temperature range, or a low temperature, i.e., lower than a normal temperature at which the battery operates normally and higher than a first temperature threshold of the preset temperature range. When the present temperature is a high temperature, the battery enters a normal temperature stage after being cooled from the present temperature to the first temperature. When the present temperature is a low temperature, the battery enters the normal temperature stage after being heated from the present temperature to the second temperature.

Optionally, the first temperature may be a maximum temperature within the first temperature range, and the second temperature may be a minimum temperature within the first temperature range.

In the embodiment of the present invention, a battery charging process can be implemented from the perspective of a full temperature interval. When the temperature of the battery is excessively high, the battery is charged and cooled to ensure charging safety. In addition, during high-temperature charging, the remaining charging time is divided into two parts, i.e., a charging time when the temperature of the battery is in a high temperature stage and a charging time when the temperature of the battery is in a normal temperature stage. A charging time obtained by summing the two parts of charging times is the remaining charging time, which has high accuracy. When the temperature of the battery is excessively low, the battery is charged and heated to ensure the charging safety. In addition, during low-temperature charging, the remaining charging time is divided into two parts, i.e., a charging time when the temperature of the battery is in a low temperature stage and a charging time when the temperature of the battery is in a normal temperature stage. A charging time obtained by summing the two parts of charging times is the remaining charging time, which has high accuracy.

Hence, when the embodiment is implemented, a present temperature of a battery is obtained; when the present temperature is within a first temperature range (at a normal temperature), a remaining charging time for the battery is obtained according to a preset current MAP table and the present temperature; when the present temperature is not within the first temperature range (at a high temperature or a low temperature), a calibrated cooling/heating time and a target charging time (a remaining charging time required after the battery is recovered from the high temperature or the low temperature to the normal temperature) are obtained; and the calibrated cooling/heating time and the target charging time are summed to obtain the remaining charging time for the battery, wherein the calibrated cooling time is obtained from a preset cooling time table, the calibrated heating time is obtained from a preset heating time table, and the target charging time is obtained according to a first temperature to be cooled to within the first temperature range (cooled to the normal temperature) or a second temperature to be heated to within the first temperature range (heated to the normal temperature) and the current MAP table. Hence, through the embodiment of the present invention, different methods for calculating a remaining charging time can be adopted according to different temperature intervals from the perspective of a full temperature interval of a battery cell, and influencing factors under different temperature intervals are taken into account, which is helpful to improve calculation accuracy of the remaining charging time.

FIG. 2 is a schematic flowchart of a method for calculating a remaining time of fast charging according to a second embodiment of the present invention. As shown in FIG. 2, the method for calculating a remaining time of fast charging may include the following steps.

201. Determine whether a battery meets a final-stage charging condition, wherein if the battery does not meet the final-stage charging condition, perform step 202, or if the battery meets the final-stage charging condition, perform step 206.

In the embodiment of the present invention, whether final-stage charging is reached is detected in real time. If the final-stage charging is reached, a final-stage voltage follow-up time is used as a remaining charging time for the battery. If the final-stage charging is not reached, the remaining charging time is calculated using the method for calculating a remaining charging time in a full temperature interval.

Optionally, the step of determining whether the battery meets the final-stage charging condition may include: obtaining a voltage and a request current of the battery in real time, and when the voltage of the battery is greater than a preset final-stage voltage and the request current is equal to a preset final-stage current, determining that the battery meets the final-stage charging condition, or when the voltage is less than or equal to the preset final-stage voltage and/or the request current is not equal to the preset final-stage current, determining that the battery does not meet the final-stage charging condition, where the preset final-stage voltage and the preset final-stage current may be preset. The preset final-stage voltage is set according to the minimum voltage of the last voltage interval in the current MAP table (which is also a voltage threshold for entering the last voltage interval from a previous voltage interval), the value of which may be greater than the minimum voltage of the last voltage interval. For example, the last voltage interval is 4.150 v $\leq$ V < 4.160 v, and the previous voltage range is 4.137 v $\leq$ V < 4.150 v. The preset final-stage voltage is set to 4.153 v, which is greater than the minimum voltage of the last voltage interval (the voltage threshold of the previous voltage interval). In addition, the preset final-stage current is set according to a request current of a unit interval composed of the last temperature interval and the last voltage interval in the current MAP table, the value of which may be equal to the request current. For example, the request current of the unit interval composed of the last temperature interval and the last voltage interval in the current MAP table is 20.20 A, and the preset final-stage current may be set to 20.20 A. Whether the final-stage charging condition is met is detected in real time, so that when the final-stage charging condition is met, the final-stage voltage follow-up time is obtained as the remaining charging time for the battery, so as to improve calculation accuracy of the remaining charging time in the final-stage charging stage of the battery.

It is to be understood that although the preset final-stage voltage is set according to the minimum voltage value of the last voltage interval of the current MAP table (the voltage threshold of the previous voltage interval), the preset final-stage voltage is greater than the minimum voltage value. In addition, according to properties of the battery in the charging process, when the battery enters a charging stage corresponding to a voltage interval, the voltage value may drop slightly and then rise linearly. Therefore, even when the battery enters the charging stage of the last voltage interval,

the voltage of the battery rises slowly and linearly, and slowly reaches the voltage meeting the preset final-stage voltage, instead of meeting the final-stage voltage as soon as it enters the last voltage interval. That is to say, the battery does not meet the final-stage charging condition as soon as the battery enters the last voltage interval.

202. Obtain a present temperature of a battery.

203. When the present temperature is within a first temperature range, obtain a remaining charging time for the battery according to a preset current MAP table and the present temperature.

In the embodiment of the present invention, the preset current MAP table is converted from an original current MAP table. Specifically, relying on the property that the request current in the current MAP table rarely changes when the battery is charged at a normal temperature, the original current MAP table is converted in the following manner. Intervals with similar and/or same request currents in the original current MAP table are grouped into blocks, so that the original task of calculating a cumulative sum of charging times of all intervals is converted into a task of calculating a cumulative sum of charging times of a few blocks, thereby reducing the burden of predicting an SOC variation amount of each interval and complexity of calculation, and improving robustness of the calculation. It should be noted that the request current mentioned in the embodiment of the present invention is a charging current of the battery.

For example, the original current MAP table provided in the embodiment of the present invention is shown in FIG. 10. In FIG. 10, a normal temperature range is divided into two temperature intervals, which are respectively, 20°C $\leq T <$ 25°C and 25°C $\leq T <$ 35°C, and the voltage range is divided into 14 voltage intervals.

After the original current MAP table shown in FIG. 10 is converted, a current MAP table shown in FIG. 11 for calculating the remaining charging time at a normal temperature in the embodiment of the present invention is obtained. Specifically, in FIG. 11, the temperature intervals of 20°C $\leq T <$ 25°C and 25°C $\leq T <$ 35°C shown in FIG. 10 are grouped into one temperature block (request currents at the two temperature intervals based on the same voltage interval are similar or identical). Voltage intervals with similar and/or same currents in FIG. 10 are grouped into a voltage block, and then the same request current is assigned for all unit intervals in a unit block (an element block in the table: request current block) formed by the voltage block and a corresponding temperature block. That is, in FIG. 11, voltage interval of 3.190-4.024 is grouped into one voltage block, voltage interval of 4.047-4.055 is grouped into one voltage block, voltage interval 4.129-4.137 is grouped into one voltage block, voltage 4.150 is one voltage block, and voltage 4.160 is one voltage block. Each request current in a unit block formed by the voltage block containing voltage interval 3.190-4.024 and the temperature block is assigned a current value of 250.00. Each request current in a unit block formed by the voltage block containing voltage interval 4.047-4.055 and the temperature block is assigned a current value of 242.40. Each request current in a unit block formed by the voltage block containing voltage interval 4.129-4.137 and the temperature block is assigned a current value of 202.00. Each request current in a unit block formed by the voltage block containing voltage interval 4.150 and the temperature block is assigned a current value of 101.00. Each request current in a unit block formed by the voltage block containing voltage interval 4.160 and the temperature block is assigned a current value of 20.20, so that all the request currents in one unit block formed by a temperature block and a voltage block are the same. It should be noted that, the current value of the request current assigned to the unit block shown in FIG. 11 is selected from one of original current values of the unit interval included in the unit block. For example, in FIG. 10, request currents corresponding to two temperature intervals in the voltage block containing voltage interval 4.150 are 82.82 and 101.00 respectively, and 101.00 is selected as a current value of request currents for all unit intervals in the unit block formed by the voltage block containing voltage interval 4.150 and the temperature block.

It should be noted that, in FIG. 10 and FIG. 11, one voltage value may be used to represent a voltage interval. For example, voltage interval 3.681 actually means voltage interval 3.190 $\leq V <$ 3.681.

Hence, in the embodiment of the present invention, because the current in the current MAP table does not change significantly, the original MAP table can be converted, and the unit intervals in each unit block can be assigned the same request current, so that the task of predicting the SOC variation amount of each interval can be lightened, complexity of calculation can be reduced, and robustness of calculation can be improved at a normal temperature. For example, in FIG. 11, because the temperature intervals are grouped into a temperature block, temperature path changes fall into the temperature block, and therefore only SOC variation amounts of five voltage blocks in the current MAP table in FIG. 11 need to be calculated, thereby greatly reducing calculation complexity and improving calculation accuracy.

204. Look up a cooling time table according to the present temperature for a calibrated cooling time required to cool the battery from the present temperature to a first temperature, obtain, based on the first temperature and the current MAP table, a first target charging time required after the battery is cooled from the present temperature to the first temperature, and sum the first target charging time and the calibrated cooling time, to obtain the remaining charging time for the battery when the present temperature is within a second temperature range, wherein a minimum temperature of the second temperature range is greater than a maximum temperature of the first temperature range.

In the embodiment of the present invention, the second temperature range is preset. The second temperature range indicates that the temperature of the battery is greater than a normal temperature at which the battery operates normally and less than a second temperature threshold, i.e., a high temperature range, for example, generally greater than 35°C.

In the embodiment of the present invention, when the battery is in the second temperature range (high temperature range), an experimental calibration method is adopted. Based on impact of a battery cell temperature on the battery, the entire vehicle is immersed in a high temperature environment until the battery cell temperature equals the ambient temperature, a fast charging experiment is then carried out to determine a time required for the battery to be cooled from a high temperature to the first temperature in the first temperature range, and then a one-dimensional relationship table, namely, the cooling time table provided in the embodiment of the present invention is generated. The cooling time table stores correlations between several temperatures in the second temperature range and calibrated cooling times. The cooling time table may also store correlations between several temperature intervals in the second temperature range and calibrated cooling times.

Further, in the embodiment of the present invention, for charging at a high temperature stage, the calibrated cooling time matching the present temperature is directly obtained from the cooling time table based on the present temperature and used as a charging time required in the high temperature stage. The charging time after cooling the battery from the high temperature to the normal temperature is obtained based on the current MAP table and the first temperature shown in FIG. 11 according to the embodiment of the present invention. Specific implementation of this is described in a subsequent embodiment. Optionally, the first temperature is the maximum temperature in the first temperature range, for example, the high end temperature 35°C of the region 20°C to 35°C.

205. When the present temperature is within a third temperature range, look up a heating time table according to the present temperature for a calibrated heating time required to heat the battery from the present temperature to the second temperature, obtain, based on the second temperature and the current MAP table, a second target charging time required after the battery is heated from the present temperature to the second temperature, and sum the second target charging time and the calibrated heating time to obtain the remaining charging time for the battery, where a maximum temperature of the third temperature range is less than a minimum temperature of the first temperature range.

In the embodiment of the present invention, the third temperature range is preset. The third temperature range indicates that the temperature of the battery is lower than the normal temperature at which the battery operates normally and greater than the first temperature threshold, i.e., a low temperature range, for example, generally lower than 20°C.

In the embodiment of the present invention, when the battery is in the third temperature range (low temperature range), an experimental calibration method is adopted. Based on impact of a battery cell temperature on the battery, the entire vehicle is immersed in a low temperature environment until the battery cell temperature equals the ambient temperature, a fast charging experiment is then carried out to determine a time required for the battery to be heated from a low temperature to the second temperature in the first temperature range, and then a one-dimensional relationship table, namely, the heating time table provided in the embodiment of the present invention is generated. The heating time table stores correlations between several temperatures in the third temperature range and calibrated heating times. The heating time table may also store correlations between several temperature intervals in the third temperature range and calibrated heating times.

Further, in the embodiment of the present invention, for charging at a low temperature stage, the calibrated heating time matching the present temperature is directly obtained from the heating time table based on the present temperature and used as a charging time required in the low temperature stage. The charging time after heating the battery from the low temperature to the normal temperature is obtained based on the current MAP table and the second temperature shown in FIG. 11 according to the embodiment of the present invention. Specific implementation of this is described in a subsequent embodiment. Optionally, the second temperature is the minimum temperature in the first temperature range, for example, the low end temperature 20°C of the region 20°C to 35°C.

206. Obtain a final-stage voltage follow-up time of the battery as the remaining charging time for the battery.

As an optional implementation, the step of obtaining a final-stage voltage follow-up time of the battery as the remaining charging time for the battery when the battery meets a final-stage charging condition specifically includes the following implementation sub-steps:

obtaining a real-time voltage of the battery when the battery meets the final-stage charging condition; and
looking up a voltage follow-up time table according to the real-time voltage, to obtain a final-stage voltage follow-up time as the remaining charging time for the battery, wherein the voltage follow-up time table includes correspondence relationship between a voltage and a final-stage voltage follow-up time.

As the charging process progresses, electricity stored in the battery gradually increases. When it is determined that the final-stage charging condition is met, calculation of the remaining charging time is replaced by calculation of the final-stage voltage follow-up time, which can effectively decouple the correlation between the final-stage remaining charging time and the SOC, such that the final-stage remaining charging time is only dependent on a monomer voltage. In addition, the final-stage monomer voltage is a monotone function. Therefore, the final-stage remaining charging time converges monotonously, thereby allowing accuracy and convergence effect of the final-stage remaining charging time to be improved.

Therefore, the embodiment implements a method for calculating a remaining charging time of a battery cell based on a full temperature range. When the temperature is in the high temperature range, the charging time in the high temperature range is calibrated by using a test method, that is, the calibrated cooling time. After charging continues from a high temperature to a normal temperature range, a block by block calculation method is adopted to group intervals with the same charging current in the normal temperature range into one block, and the calibrated cooling time and the first target charging time in the normal temperature range are summed to obtain the remaining charging time for the battery. Similarly, when the temperature is in the low temperature range, the charging time in the low temperature range is calibrated by using a test method, that is, the calibrated heating time. After charging continues from a low temperature to a normal temperature range, a block by block calculation method is adopted to group intervals with the same charging current in the normal temperature range into one block, and the calibrated heating time and the second target charging time in the normal temperature range are summed to obtain the remaining charging time for the battery. In addition, a final-stage voltage follow-up algorithm is adopted in the final charging stage, and calculation of the remaining charging time is decoupled from the SOC and is only correlated with a monomer voltage, so as to ensure final-stage calculation accuracy of the remaining charging time and achieve the objective of stable convergence. In summary, the embodiment of the present invention simplifies calculation of remaining charging time in a full temperature range and a full SOC interval, improves calculation accuracy, robustness, and convergence effect of the remaining charging time at high and low temperatures, and achieves the purpose of platform implementation.

FIG. 3 is a schematic flowchart of a method for calculating a remaining time of fast charging according to a third Embodiment of the present invention. In the method shown in FIG. 3, in the scenario of fast charging when a present temperature is within a first temperature range is provided, step 203 specifically includes the following implementation sub-steps:

301. when the present temperature is within the first temperature range, obtain, from the current MAP table and based on the present temperature, request currents respectively corresponding to n voltage blocks that have been gone through during a rise from the present voltage of the battery to a corresponding voltage when charging completes, to obtain n request currents, wherein n is a positive integer;

302. obtain SOC variation amounts respectively corresponding to the n voltage blocks, to obtain n SOC variation amounts;

303. obtain the remaining charging time for the battery based on the n SOC variation amounts, the n request currents, a charging pile output current of the battery, an average current, and a rated capacity of the battery, where the average current is an actual current of the battery.

In some optional implementations, step 303 may be implemented as follows:

calculating a first present charging time based on an SOC variation amount corresponding to the $1^{st}$ voltage block in the n voltage blocks, the rated capacity of the battery, the charging pile output current of the battery, the $1^{st}$ request current in the n request currents, and the average current;

when n = 1, using the first present charging time as the remaining charging time for the battery; and

when $n \geq 2$, calculating an $i^{th}$ first subsequent charging time based on the SOC variation amount corresponding to the $i^{th}$ voltage block in the n voltage blocks, the rated capacity of the battery, the charging pile output current of the battery, and the $i^{th}$ request current in the n request currents to obtain n-1 first subsequent charging times, and summing the first present charging time and the n-1 first subsequent charging times, to obtain the remaining charging time for the battery, where $2 \leq i \leq n$.

When n = 1, that is, the number of voltage blocks that have been gone through during the rise from the present voltage of the battery to the corresponding voltage when charging completes is 1, e.g., in case that the battery starts charging when the remaining power is high, and when the battery voltage detected in real time does not match a final-stage voltage under the final-stage charging condition, the first present charging time is calculated as the remaining charging time for the battery. When $n \geq 2$, n-1 first subsequent charging times are calculated, and the first present charging time and the n-1 first subsequent charging times are summed to obtain the remaining charging time for the battery.

Further optionally, the operation of calculating a first present charging time based on an SOC variation amount corresponding to the $1^{st}$ voltage block in the n voltage blocks, the rated capacity of the battery, the charging pile output current of the battery, the $1^{st}$ request current in the n request currents, and the average current includes:

calculating a product of the SOC variation amount corresponding to the $1^{st}$ voltage block in the n voltage blocks and the rated capacity of the battery, to obtain a first product;

obtaining a first minimum current from the charging pile output current of the battery, the $1^{st}$ request current in the n request currents, and the average current; and

calculating a quotient of the first product and the first minimum current, and performing time unit conversion on the

quotient to obtain the first present charging time.

The time unit conversion may be by multiplying the last quotient by 60 to perform further conversion into a corresponding time unit.

In addition, further optionally, the operation of calculating an $i^{th}$ first subsequent charging time based on the SOC variation amount corresponding to the $i^{th}$ voltage block in the n voltage blocks, the rated capacity of the battery, the charging pile output current of the battery, and the $i^{th}$ request current in the n request currents to obtain n-1 first subsequent charging times may include the following implementing steps:

calculating a second product of the SOC variation amount corresponding to the $i^{th}$ voltage block in the n voltage blocks and the rated capacity of the battery;
obtaining a second minimum current from the charging pile output current of the battery and the $i^{th}$ request current in the n request currents; and
calculating a quotient of the second product and the second minimum current, performing time unit conversion on the quotient to obtain the $i^{th}$ first subsequent charging time, and obtaining the n-1 first subsequent charging times in combination with n-1 voltage blocks.

In combination with the foregoing description, a formula for calculating the remaining charging time for the battery may be:

$$T_{\text{remaining time of charging}} = T_{\text{present}} + T_{\text{subsequent}};$$

$$T_{\text{present}} = \frac{\blacktriangle SOC * Q_{\text{rated}}}{\min(I_0, I_1, I_{\text{average}})} \times 60;$$

$$T_{\text{subsequent}} = \frac{\blacktriangle SOC * Q_{\text{rated}}}{\min(I_0, I_2)} \times 60 + \ldots + \frac{\blacktriangle SOC_n * Q_{\text{rated}}}{\min(I_0, I_n)} \times 60.$$

where $Q_{rated}$ is the rated capacity of the battery, n represents the number of voltage blocks that have been gone through during the rise from the present voltage to the corresponding voltage when charging completes, n is a positive integer and n≥1; $\blacktriangle SOC_1$ is the SOC variation amount of the 1st voltage block (the present voltage block); $\blacktriangle SOC_2$ is an SOC variation amount of the 2nd voltage block; $\blacktriangle SOC_n$ is an SOC variation amount of the $n^{th}$ voltage block; $I_0$ is the charging pile output current of the battery; $I_1$ is the 1st request current in the n request currents; $I_2$ is the 2nd request current; $I_n$ is the $n^{th}$ request current; and $I_{average}$ is the average current, and where the average current is equal to the actual current of the battery.

It should be noted that when n = 1, it is merely necessary to calculate $T_{present}$ as the remaining charging time for the battery through the above-mentioned calculation formulas, and when n ≥ 2, it is necessary to calculate $T_{present} + T_{subsequent}$ to obtain the remaining charging time for the battery.

Hence, through implementation of the embodiment of FIG. 3, the remaining charging time is calculated at a normal temperature in the normal temperature range, intervals with the same request current in the current MAP table are grouped into a block, an SOC variation amount of each block is predicted, the charging time is calculated according to the SOC variation amount and a request current of each block, and then the charging times of all blocks are summed to obtain the remaining charging time. Moreover, the task of calculating a cumulative sum of charging times of a large number of intervals is converted into a task of calculating a cumulative sum of charging times of a few blocks, thereby reducing the burden of predicting an SOC variation amount for each interval, reducing complexity of calculation, and improving robustness of calculation, thus facilitating system platform implementation.

FIG. 4 is a schematic flowchart of a method for calculating a remaining time of fast charging according to a fourth embodiment of the present invention. In the method shown in FIG. 4, in a specific scenario when the present temperature is within the second temperature range, the step of obtaining, based on the first temperature and the current MAP table, a first target charging time required after the battery is cooled from the present temperature to the first temperature in step 204 may specifically include the following implementing steps:

401. obtain a first voltage of the battery when cooled from the present temperature to the first temperature and a cooling SOC variation amount during the cooling;

402. obtain, from the current MAP table and based on the first temperature, request currents respectively corresponding to m voltage blocks that have been gone through during the rise from the first voltage to the corresponding voltage when charging completes, to obtain m request currents, where m is a positive integer;

403. obtain SOC variation amounts respectively corresponding to the m voltage blocks to obtain m SOC variation amounts; and

404. obtain, based on the cooling SOC variation amount, the m SOC variation amounts, the m request currents, the charging pile output current of the battery, the average current, and the rated capacity of the battery, wherein the first target charging time required after the battery is cooled from the present temperature to the first temperature, and the average current is an actual current of the battery.

In some optional implementations, step 404 may include:

calculating a second present charging time based on an SOC variation amount corresponding to the 1$^{st}$ voltage block in the m voltage blocks, the cooling SOC variation amount, the rated capacity of the battery, the charging pile output current of the battery, the 1$^{st}$ request current in the m request currents, and the average current;
when m = 1, using the second present charging time as the first target charging time required after the battery is cooled from the present temperature to the first temperature; and
when m ≥ 2, calculating a j$^{th}$ second subsequent charging time based on an SOC variation amount corresponding to a j$^{th}$ voltage block in the m voltage blocks, the rated capacity of the battery, the charging pile output current of the battery, and a j$^{th}$ request current in the m request currents, obtaining m-1 second subsequent charging times, and summing the second present charging time and the m-1 second subsequent charging times, to obtain the first target charging time required after the battery is cooled from the present temperature to the first temperature, where $2 \leq j \leq m$.

When m = 1, that is, the number of voltage blocks that have been gone through during the rise from the first voltage to the corresponding voltage when charging completes is 1 and when a battery voltage detected in real time does not meet a final-stage voltage under the final-stage charging condition, the second present charging time is calculated as the first target charging time. When m ≥ 2, m-1 second subsequent charging times are further calculated, and the second present charging time and the m-1 second subsequent charging times are summed to obtain the first target charging time.

Further optionally, the operation of calculating a second present charging time based on an SOC variation amount corresponding to the 1$^{st}$ voltage block in the m voltage blocks, the cooling SOC variation amount, the rated capacity of the battery, the charging pile output current of the battery, the 1$^{st}$ request current in the m request currents, and the average current may include the following implementing steps:

calculating a quotient of the 1$^{st}$ request current in the m request currents and a present request current, and multiplying the quotient by the average current to obtain a first current;
calculating a difference between the SOC variation amount corresponding to the 1$^{st}$ voltage block in the m voltage blocks and the cooling SOC variation amount, to obtain a first difference;
calculating a product of the first difference and the rated capacity of the battery to obtain a third product;
obtaining a third minimum current from the charging pile output current of the battery, the 1$^{st}$ request current in the m request currents, and the first current; and
calculating a quotient of the third product and the third minimum current, and performing time unit conversion on the quotient to obtain the second present charging time.

In addition, further optionally, the operation of calculating a j$^{th}$ second subsequent charging time based on an SOC variation amount corresponding to a j$^{th}$ voltage block in the m voltage blocks, the rated capacity of the battery, the charging pile output current of the battery, and a j$^{th}$ request current in the m request currents, and obtaining m-1 second subsequent charging times may be implemented through the following steps:

calculating a fourth product of the SOC variation amount corresponding to the j$^{th}$ voltage block in the m voltage blocks and the rated capacity of the battery;
obtaining a fourth minimum current from the charging pile output current of the battery and the j$^{th}$ request current

in the m request currents; and
calculating a quotient of the fourth product and the fourth minimum current, performing time unit conversion on the quotient to obtain the $j^{th}$ second subsequent charging time, and obtaining the m-1 second subsequent charging times in combination with m-1 voltage blocks.

In combination with the foregoing description, when the temperature of the battery is in the second temperature range (at a high temperature), the formula for calculating the remaining charging time may be as follows:

$$T_{high\,temperature} = T_{cooling} + T_{normal\ temperature}.$$

$T_{cooling}$ = F1($T$) and $T_{cooling}$ is the calibrated cooling time. Because the cooling time is correlated with only the battery cell temperature, the calibrated cooling time can be directly obtained by looking up the cooling time table described above according to the present temperature.

$$\Delta SOC_{cooling} = F1''(T, SOC).$$

$\Delta SOC_{cooling}$ is the SOC variation amount during said cooling, correlated with the battery cell temperature and the SOC, obtained in advance through experiments, compiled into a two-dimensional table, written into a computer system, and can be directly obtained through table lookup according to the present temperature and the present SOC of the battery.

$$T_{normal\ tempera} = T_{present} + T_{subsequent};$$

$$T_{present} = \frac{(\blacktriangle SOC_1 - \Delta SOC_{cooling}) * Q_{rated}}{\min(I_0, I_1, I'')} \times 60;$$

$$T_{subsequent} = \frac{\blacktriangle SOC * Q_{rated}}{\min(I_0, I_2)} \times 60 + \ldots + \frac{\blacktriangle SOC_m * Q_{rated}}{\min(I_0, I_m)} \times 60;$$

$$I'' = F_{current1}(I_{average}) = {}^{I_1}\!\!/_{I_{present\ request\ current}} * I_{average}.$$

where $I_{average}$ is the actual current of the battery; $I_{present\ request\ current}$ is the present request current; $Q_{rated}$ is the rated capacity of the battery; m represents the number of voltage blocks that have been gone through during the rise of the voltage to the corresponding voltage when charging completes when the temperature is cooled down to the first temperature; $\blacktriangle SOC_1$ is the SOC variation amount of the $1^{st}$ voltage block in the m voltage blocks; $\blacktriangle SOC_2$ is an SOC variation amount of the $2^{nd}$ voltage block in the m voltage blocks; $\blacktriangle SOC_m$ is an SOC variation amount of the $m^{th}$ voltage block; $I_0$ is the charging pile output current of the battery; $I_1$ is the $1^{st}$ request current in the m request currents; $I_2$ is the $2^{nd}$ request current; $I_m$ is the $m^{th}$ request current, and m is a positive integer greater than or equal to 1.

It should be noted that, when m = 1, in the above-mentioned implementation, it is merely necessary to look up for $T_{cooling}$, calculate $T_{normal}$ temperature = $T_{present}$, and calculate a sum of $T_{cooling}$ + $T_{normal}$ temperature, to obtain the remaining charging time for the battery. When m ≥ 2, it is necessary to look up for $T_{cooling}$, calculate $T_{normal}$ temperature = $T_{present}$ + $T_{subsequent}$, and calculate a sum of $T_{cooling}$ + $T_{normal}$ temperature, to obtain the remaining charging time for the battery.

Therefore, by implementing the embodiment shown in FIG. 4, the remaining charging time in a high temperature environment is the sum of the charging time in the high temperature stage and the charging time in the normal temperature stage. First, the high temperature cooling time and the SOC variation amount in the cooling process of the high temperature stage are calibrated through high temperature experiments, and experimental data is compiled into computer coding. When the battery is charged at a high temperature in an actual environment, the calibrated cooling time and the SOC variation amount in the high temperature stage are obtained by looking up the cooling time table according to the present

temperature, then the charging time in the normal temperature stage after the temperature of the battery is cooled to a normal temperature is calculated by combining the SOC variation amount in the cooling process, and the remaining charging time for the battery can be obtained by summing the calibrated cooling time in the high temperature stage and the charging time in the normal temperature stage. In addition, in the embodiment, because the calibrated cooling time and the SOC variation amount are obtained through experiments as the basis for subsequent calculation at the normal temperature, there is no need to predict the charging path and the SOC variation amount, which can help to improve accuracy of the calculation result.

FIG. 5 is a schematic flowchart of a method for calculating a remaining time of fast charging according to a fifth embodiment of the present invention. In the method shown in FIG. 5, in a specific scenario when the present temperature is in the third temperature range, the obtaining, based on the second temperature and the current MAP table, a second target charging time required after the battery is heated from the present temperature to the second temperature in step 205 may specifically include the following implementing steps:

501. obtain a second voltage of the battery when heated from the present temperature to the second temperature and a heating SOC variation amount during the heating;

502. obtain, from the current MAP table and based on the second temperature, request currents respectively corresponding to p voltage blocks that have been gone through during a rise from the second voltage to the corresponding voltage when charging completes, to obtain p request currents, where p is a positive integer;

503. obtain SOC variation amounts respectively corresponding to the p voltage blocks, to obtain p SOC variation amounts; and

504. obtain, based on the heating SOC variation amount, the p SOC variation amounts, the p request currents, the charging pile output current of the battery, the average current, and the rated capacity of the battery, the second target charging time required after the battery is heated from the present temperature to the second temperature.

In some optional implementations, step 504 may specifically include the following steps:

calculating a third present charging time based on an SOC variation amount corresponding to the $1^{st}$ voltage block in the p voltage blocks, the heating SOC variation amount, the rated capacity of the battery, the charging pile output current of the battery, the $1^{st}$ request current in the p request currents, and the average current;
when p = 1, using the third present charging time as the second target charging time; and
when $p \geq 2$, calculating a $k^{th}$ third subsequent charging time based on an SOC variation amount corresponding to a $k^{th}$ voltage block in the p voltage blocks, the rated capacity of the battery, the charging pile output current of the battery, and a $k^{th}$ request current in the p request currents, obtaining k-1 third subsequent charging times, and summing the third present charging time and the k-1 third subsequent charging times, to obtain the second target charging time required after the battery is heated from the present temperature to the second temperature, where $2 \leq k \leq p$.

When p = 1, that is, the number of voltage blocks that have been gone through during the rise from the second voltage to the corresponding voltage when charging completes is 1 and when a battery voltage detected in real time does not match a final-stage voltage under the final-stage charging condition, the third present charging time is calculated as the second target charging time. When $p \geq 2$, p-1 third subsequent charging times are further calculated, and the third present charging time and the p-1 third subsequent charging times are summed to obtain the second target charging time.

Further optionally, the operation of calculating a third present charging time based on an SOC variation amount corresponding to the $1^{st}$ voltage block in the p voltage blocks, the heating SOC variation amount, the rated capacity of the battery, the charging pile output current of the battery, the $1^{st}$ request current in the p request currents, and the average current may include:

calculating a quotient of the $1^{st}$ request current in the p request currents and a present request current, and multiplying the quotient by the average current to obtain a second current;
calculating a difference between the SOC variation amount corresponding to the $1^{st}$ voltage block in the p voltage blocks and the heating SOC variation amount, to obtain a second difference;
calculating a product of the second difference and the rated capacity of the battery to obtain a fifth product;
obtaining a fifth minimum current from the charging pile output current of the battery, the $1^{st}$ request current in the p request currents, and the second current; and

calculating a quotient of the fifth product and the fifth minimum current, and performing time unit conversion on the quotient to obtain the third present charging time.

In addition, further optionally, the operation of calculating a $k^{th}$ third subsequent charging time based on an SOC variation amount corresponding to a $k^{th}$ voltage block in the p voltage blocks, the rated capacity of the battery, the charging pile output current of the battery, and a $k^{th}$ request current in the p request currents, and obtaining the k-1 third subsequent charging times includes:

calculating a sixth product of the SOC variation amount corresponding to the $k^{th}$ voltage block in the p voltage blocks and the rated capacity of the battery;
obtaining a sixth minimum current from the charging pile output current of the battery and the $k^{th}$ request current in the p request currents; and
calculating a quotient of the sixth product and the sixth minimum current, performing time unit conversion on the quotient to obtain the $k^{th}$ third subsequent charging time, and obtaining p-1 third subsequent charging times in combination with the p-1 voltage blocks.

In combination with the foregoing description, when the temperature of the battery is in the third temperature range (at a low temperature), the formula for calculating the remaining charging time may be as follows:

$$T_{\text{low temperature}} = T_{\text{heating}} + T_{\text{normal temperature}} \text{ .}$$

$T_{heating}$ = F2($T$), and $T_{heating}$ is the calibrated heating time. Because the heating time is correlated with only the battery cell temperature, the calibrated heating time can be directly obtained by looking up the heating time table described above according to the present temperature.

$$\Delta \text{SOC}_{\text{heating}} = \text{F2}''(T, SOC) \text{ .}$$

$\Delta SOC_{heating}$ is the SOC variation amount during the heating, correlated with the battery cell temperature and the SOC, obtained in advance through experiments, compiled into a two-dimensional table, written into a computer system, and can be directly obtained through table lookup according to the present temperature and the present SOC of the battery.

$$T_{\text{normal tempera}} = T_{\text{present}} + T_{\text{subsequent}} \text{ ;}$$

$$T_{\text{present}} = \frac{(\blacktriangle SOC_1 - \Delta \text{SOC}_{\text{heating}}) * Q_{\text{rated}}}{\min(I_0, I_1, I''')} \times 60 \text{ ;}$$

$$T_{\text{subsequent}} = \frac{\blacktriangle SOC_2 * Q_{\text{rated}}}{\min(I_0, I_2)} \times 60 + \ldots + \frac{\blacktriangle SOC_p * Q_{\text{rated}}}{\min(I_0, I_p)} \times 60 \text{ ;}$$

$$I''' = F_{\text{current2}}(I_{\text{average}}) = {}^{I_1}\!/_{I_{\text{present request current}}} * I_{\text{average}} \text{ .}$$

where $I_{average}$ herein is the actual current of the battery; $I_{present\ request\ current}$ is a present charging current; $Q_{rated}$ is the rated capacity of the battery; p represents the number of voltage blocks that have been gone through during the rise of the voltage to the corresponding voltage when charging completes when the temperature is heated to the second temperature; $\blacktriangle SOC_1$ is the SOC variation amount of the $1^{st}$ voltage block in the p voltage blocks; $\blacktriangle SOC_2$ is an SOC variation amount of the $2^{nd}$ voltage block; $\blacktriangle SOC_p$ is an SOC variation amount of the $p^{th}$ voltage block; $I_0$ is the charging pile output current of the battery; $I_1$ is the $1^{st}$ request current in the p request currents; $I_2$ is the $2^{nd}$ request current; $I_p$ is the $p^{th}$ request current, and p is a positive integer and $P \geq 1$.

It should be noted that, when p = 1, in the above-mentioned implementation, it is merely necessary to look up for $T_{cooling}$, calculate $T_{normal}$ temperature = $T_{present}$, and calculate a sum of $T_{cooling}$ + $T_{normal}$ temperature, to obtain the remaining charging time for the battery. When p ≥ 2, it is necessary to look up for $T_{cooling}$, calculate $T_{normal}$ temperature = $T_{present}$ + $T_{subsequent}$, and calculate a sum of $T_{cooling}$ + $T_{normal}$ temperature, to obtain the remaining charging time for the battery.

Therefore, by implementing the embodiment shown in FIG. 5, the remaining charging time in a low temperature environment is the sum of the charging time in the low temperature stage and the charging time in the normal temperature stage. First, the low temperature heating time and the SOC variation amount in the heating process of the low temperature stage are calibrated through low temperature experiments, and experimental data is compiled into computer code. When the battery is charged at a low temperature in an actual environment, the calibrated heating time and the SOC variation amount in the low temperature stage are obtained by looking up the heating time table according to the present temperature, then the charging time in the normal temperature stage after the temperature of the battery is heated to a normal temperature is calculated by combining the SOC variation amount in the heating process, and the remaining charging time for the battery can be obtained by summing the calibrated heating time in the low temperature stage and the charging time in the normal temperature stage. In addition, in the embodiment, because the calibrated heating time and the SOC variation amount are obtained through experiments and used as the basis for subsequent calculation at the normal temperature, there is no need to predict the charging path and the SOC variation amount, which can help to improve accuracy of the calculation result.

FIG. 6 is a schematic structural diagram of an apparatus for calculating a remaining time of fast charging according to the first embodiment of the present invention. As shown in FIG. 6, the apparatus for calculating a remaining time of fast charging may include:

a first obtaining module 601, configured to obtain a present temperature of a battery;
a second obtaining module 602, configured to, when the present temperature is within a first temperature range, obtain a remaining charging time for the battery according to a preset current MAP table and the present temperature; and
a third obtaining module 603, configured to, when the present temperature is not within the first temperature range, obtain a calibrated cooling/heating time and a target charging time, and sum the calibrated cooling/heating time and the target charging time to obtain the remaining charging time for the battery.

The calibrated cooling time is obtained from a preset cooling time table and is a time required to cool the battery from the present temperature to a first temperature within the first temperature range, the calibrated heating time is obtained from a preset heating time table and is a time required to heat the battery from the present temperature to a second temperature within the first temperature range, and the target charging time is obtained according to the first temperature or the second temperature and the current MAP table.

Through the apparatus, different methods for calculating a remaining charging time can be adopted according to different temperature intervals from the perspective of a full temperature range of a battery cell, and influencing factors under different temperature intervals are fully taken into account, which is helpful to improve calculation accuracy of the remaining charging time.

The current MAP table includes N temperature blocks, M voltage blocks, and request currents corresponding to P unit blocks respectively, each of the temperature blocks includes at least one temperature interval, each of the voltage blocks includes at least one voltage interval, each of the unit blocks includes at least one unit interval, and request currents corresponding to all unit intervals in each of the unit blocks are equal, where P=N*M and N, M, and P are positive integers.

In the present invention, by providing a MAP table, the original task of calculating a cumulative sum of charging times of all intervals is converted into a task of calculating a cumulative sum of charging times of a few blocks, thereby reducing the burden of predicting an SOC variation amount of each interval, reducing complexity of calculation, and improving robustness of calculation.

As an optional implementation, the method for the second obtaining module 602 to obtain a remaining charging time for the battery according to a preset current MAP table and the present temperature when the present temperature is within a first temperature range specifically includes:

when the present temperature is within the first temperature range, obtaining, from the current MAP table and based on the present temperature, request currents respectively corresponding to n voltage blocks that have been gone through during the rise from a present voltage of the battery to a corresponding voltage when charging completes, to obtain n request currents, wherein n is a positive integer;
obtaining state of charge (SOC) variation amounts respectively corresponding to the n voltage blocks, to obtain n SOC variation amounts; and

obtaining the remaining charging time for the battery based on the n SOC variation amounts, the n request currents, a charging pile output current of the battery, an average current, and a rated capacity of the battery, where the average current is an actual current of the battery.

Further, in another optional implementation, the method for the second obtaining module 602 to obtain the remaining charging time for the battery based on the n SOC variation amounts, the n request currents, a charging pile output current, an average current, and a rated capacity of the battery specifically includes:

calculating a first present charging time based on an SOC variation amount corresponding to the 1st voltage block in the n voltage blocks, the rated capacity of the battery, the charging pile output current of the battery, the 1st request current in the n request currents, and the average current;
when n = 1, using the first present charging time as the remaining charging time for the battery; and
when $n \geq 2$, calculating an $i^{th}$ first subsequent charging time based on an SOC variation amount corresponding to an $i^{th}$ voltage block in the n voltage blocks, the rated capacity of the battery, the charging pile output current of the battery, and an $i^{th}$ request current in the n request currents to obtain n-1 first subsequent charging times, and summing the first present charging time and the n-1 first subsequent charging times, to obtain the remaining charging time for the battery, where $2 \leq i \leq n$.

Further optionally, the method for the second obtaining module 602 to calculate a first present charging time based on an SOC variation amount corresponding to the 1st voltage block in the n voltage blocks, the rated capacity of the battery, the charging pile output current of the battery, the present temperature, a request current corresponding to a unit block composed of the 1st voltage block, and the average current specifically includes:

calculating a product of the SOC variation amount corresponding to the 1st voltage block in the n voltage blocks and the rated capacity of the battery, to obtain a first product;
obtaining a first minimum current from the charging pile output current of the battery, the 1st request current in the n request currents, and the average current; and
calculating a quotient of the first product and the first minimum current, and performing time unit conversion on the quotient to obtain the first present charging time.

In addition, the method for the second obtaining module 602 to calculate an $i^{th}$ first subsequent charging time based on an SOC variation amount corresponding to an $i^{th}$ voltage block in the n voltage blocks, the rated capacity of the battery, the charging pile output current of the battery, and an $i^{th}$ request current in the n request currents to obtain n-1 first subsequent charging times may specifically include:

calculating a second product of the SOC variation amount corresponding to the $i^{th}$ voltage block in the n voltage blocks and the rated capacity of the battery;
obtaining a second minimum current from the charging pile output current of the battery and the $i^{th}$ request current in the n request currents; and
calculating a quotient of the second product and the second minimum current, performing time unit conversion on the quotient to obtain the $i^{th}$ first subsequent charging time, and obtaining the n-1 first subsequent charging times in combination with n-1 voltage blocks.

Hence, through the above-mentioned implementation, the remaining charging time is calculated at a normal temperature in the normal temperature range, intervals with the same request current in the current MAP table are grouped into a block, an SOC variation amount of each block is predicted, the charging time is calculated according to the SOC variation amount and a request current of each block, and then charging times of all blocks are summed to obtain the remaining charging time. Moreover, the task of calculating a cumulative sum of charging times of a large number of intervals is converted into a task of calculating a cumulative sum of charging times of a few blocks, thereby reducing the burden of predicting an SOC variation amount of each interval, reducing complexity of calculation, and improving robustness of calculation, thus facilitating system platform implementation.

FIG. 7 is a schematic structural diagram of an apparatus for calculating a remaining time of fast charging according to the second embodiment of the present invention. As shown in FIG. 7, in the apparatus for calculating a remaining time of fast charging, the third obtaining module 603 further includes:

a first obtaining sub-module 710, configured to, when the present temperature is within a second temperature range, look up the cooling time table according to the present temperature for the calibrated cooling time required to cool the battery from the present temperature to the first temperature, obtain, based on the first temperature and the

current MAP table, a first target charging time required after the battery is cooled from the present temperature to the first temperature, and sum the first target charging time and the calibrated cooling time to obtain the remaining charging time for the battery, wherein a minimum temperature of the second temperature range is greater than a maximum temperature of the first temperature range; and
a second obtaining sub-module 720, configured to, when the present temperature is within a third temperature range, look up the heating time table according to the present temperature for the calibrated heating time required to heat the battery from the present temperature to the second temperature, obtain, based on the second temperature and the current MAP table, a second target charging time required after the battery is heated from the present temperature to the second temperature, and sum the second target charging time and the calibrated heating time to obtain the remaining charging time for the battery, where a maximum temperature of the third temperature range is less than a minimum temperature of the first temperature range.

As an optional implementation, the method for the first obtaining sub-module 710 to obtain, based on the first temperature and the current MAP table, a first target charging time required after the battery is cooled from the present temperature to the first temperature specifically includes:

obtaining a first voltage of the battery when cooled from the present temperature to the first temperature and a cooling SOC variation amount during the cooling;
obtaining, from the current MAP table and based on the first temperature, request currents respectively corresponding to m voltage blocks that have been gone through during the rise from the first voltage to the corresponding voltage when charging completes, to obtain m request currents, where m is a positive integer;
obtaining SOC variation amounts respectively corresponding to the m voltage blocks, to obtain m SOC variation amounts; and
obtaining, based on the cooling SOC variation amount, the m SOC variation amounts, the m request currents, the charging pile output current of the battery, the average current, and the rated capacity of the battery, the first target charging time required after the battery is cooled from the present temperature to the first temperature.

Further, in some optional implementations, the method for the first obtaining sub-module 710 to obtain, based on the cooling SOC variation amount, the m SOC variation amounts, the m request currents, the charging pile output current of the battery, the average current, and the rated capacity of the battery, the first target charging time required after the battery is cooled from the present temperature to the first temperature specifically includes:

calculating a second present charging time based on an SOC variation amount corresponding to the $1^{st}$ voltage block in the m voltage blocks, the cooling SOC variation amount, the rated capacity of the battery, the charging pile output current of the battery, the $1^{st}$ request current in the m request currents, and the average current;
when m = 1, using the second present charging time as the first target charging time; and
when $m \geq 2$, calculating a $j^{th}$ second subsequent charging time based on an SOC variation amount corresponding to a $j^{th}$ voltage block in the m voltage blocks, the rated capacity of the battery, the charging pile output current of the battery, and a $j^{th}$ request current in the m request currents, obtaining m-1 second subsequent charging times, and summing the second present charging time and the m-1 second subsequent charging times, to obtain the first target charging time required after the battery is cooled from the present temperature to the first temperature, where $2 \leq j \leq m$.

Further, the method for the first obtaining sub-module 710 to calculate a second present charging time based on an SOC variation amount corresponding to the $1^{st}$ voltage block in the m voltage blocks, the cooling SOC variation amount, the rated capacity of the battery, the charging pile output current of the battery, the $1^{st}$ request current in the m request currents, and the average current specifically includes:

calculating a quotient of the $1^{st}$ request current in the m request currents and a present request current, and multiplying the quotient by the average current to obtain a first current;
calculating a difference between the SOC variation amount corresponding to the $1^{st}$ voltage block in the m voltage blocks and the cooling SOC variation amount, to obtain a first difference;
calculating a product of the first difference and the rated capacity of the battery to obtain a third product;
obtaining a third minimum current from the charging pile output current of the battery, the $1^{st}$ request current in the m request currents, and the first current; and
calculating a quotient of the third product and the third minimum current, and performing time unit conversion on the quotient to obtain the second present charging time.

In addition, the method for the first obtaining module 710 to calculate a $j^{th}$ second subsequent charging time based on an SOC variation amount corresponding to a $j^{th}$ voltage block in the m voltage blocks, the rated capacity of the battery, the charging pile output current of the battery, and a $j^{th}$ request current in the m request currents, and obtain m-1 second subsequent charging times may specifically include:

calculating a fourth product of the SOC variation amount corresponding to the $j^{th}$ voltage block in the m voltage blocks and the rated capacity of the battery;
obtaining a fourth minimum current from the charging pile output current of the battery and the $j^{th}$ request current in the m request currents; and
calculating a quotient of the fourth product and the fourth minimum current, performing time unit conversion on the quotient to obtain the $j^{th}$ second subsequent charging time, and obtaining the m-1 second subsequent charging times in combination with m-1 voltage blocks.

In the above-mentioned implementation, the remaining charging time in a high temperature environment is the sum of the charging time in the high temperature stage and the charging time in the normal temperature stage. First, the high temperature cooling time and the SOC variation amount in the cooling process of the high temperature stage are calibrated through high temperature experiments, and experimental data is compiled into software codes. When the battery is charged at a high temperature in an actual environment, the calibrated cooling time and the SOC variation amount in the high temperature stage are obtained by looking up the cooling time table according to the present temperature, then the charging time in the normal temperature stage after the temperature of the battery is cooled to a normal temperature is calculated by combining the SOC variation amount in the cooling process, and the remaining charging time for the battery can be obtained by summing the calibrated cooling time in the high temperature stage and the charging time in the normal temperature stage. In addition, in the embodiment, because the calibrated cooling time and the SOC variation amount are obtained through experiments and used as the basis for subsequent calculation at the normal temperature, there is no need to predict the charging path and the SOC variation amount, which can help to improve accuracy of the calculation result.

As an optional implementation, the method for the second obtaining sub-module 720 to obtain, based on the second temperature and the current MAP table, a second target charging time required after the battery is heated from the present temperature to the second temperature specifically includes:

obtaining a second voltage of the battery when heated from the present temperature to the second temperature and a heating SOC variation amount during the heating;
obtaining, from the current MAP table and based on the second temperature, request currents respectively corresponding to p voltage blocks that have been gone through during the rise from the second voltage to the corresponding voltage when charging completes, to obtain p request currents, where p is a positive integer;
obtaining SOC variation amounts respectively corresponding to the p voltage blocks, to obtain p SOC variation amounts; and
obtaining, based on the heating SOC variation amount, the p SOC variation amounts, the p request currents, the charging pile output current of the battery, the average current, and the rated capacity of the battery, the second target charging time required after the battery is heated from the present temperature to the second temperature.

Further, in some optional implementations, the method for the second obtaining sub-module 720 to obtain, based on the heating SOC variation amount, the p SOC variation amounts, the p request currents, the charging pile output current of the battery, the average current, and the rated capacity of the battery, the second target charging time required after the battery is heated from the present temperature to the second temperature specifically includes:

calculating a third present charging time based on an SOC variation amount corresponding to the $1^{st}$ voltage block in the p voltage blocks, the heating SOC variation amount, the rated capacity of the battery, the charging pile output current of the battery, the $1^{st}$ request current in the p request currents, and the average current;
when $p = 1$, using the third present charging time as the second target charging time; and
when $p \geq 2$, calculating a $k^{th}$ third subsequent charging time based on an SOC variation amount corresponding to a $k^{th}$ voltage block in the p voltage blocks, the rated capacity of the battery, the charging pile output current of the battery, and a $k^{th}$ request current in the p request currents, obtaining k-1 third subsequent charging times, and summing the third present charging time and the k-1 third subsequent charging times, to obtain the second target charging time required after the battery is heated from the present temperature to the second temperature, where $2 \leq k \leq p$.

Further, the method for the second obtaining sub-module 720 to calculate a third present charging time based

on an SOC variation amount corresponding to the 1st voltage block in the p voltage blocks, the heating SOC variation amount, the rated capacity of the battery, the charging pile output current of the battery, the 1st request current in the p request currents, and the average current specifically includes:

calculating a quotient of the 1st request current in the p request currents and a present request current, and multiplying the quotient by the average current to obtain a second current;
calculating a difference between the SOC variation amount corresponding to the 1st voltage block in the p voltage blocks and the heating SOC variation amount, to obtain a second difference;
calculating a product of the second difference and the rated capacity of the battery to obtain a fifth product;
obtaining a fifth minimum current from the charging pile output current of the battery, the 1st request current in the p request currents, and the second current; and
calculating a quotient of the fifth product and the fifth minimum current, and performing time unit conversion on the quotient to obtain the third present charging time.

Further optionally, the method for the second obtaining sub-module 720 to calculate a $k^{th}$ third subsequent charging time based on an SOC variation amount corresponding to a $k^{th}$ voltage block in the p voltage blocks, the rated capacity of the battery, the charging pile output current of the battery, and a $k^{th}$ request current in the p request currents, and obtain the k-1 third subsequent charging times specifically includes:

calculating a sixth product of the SOC variation amount corresponding to the $k^{th}$ voltage block in the p voltage blocks and the rated capacity of the battery;
obtaining a sixth minimum current from the charging pile output current of the battery and the $k^{th}$ request current in the p request currents; and
calculating a quotient of the sixth product and the sixth minimum current, performing time unit conversion on the quotient to obtain the $k^{th}$ third subsequent charging time, and obtaining p-1 third subsequent charging times in combination with the p-1 voltage blocks.

The foregoing embodiment provides a method for calculating a remaining charging time for a battery cell using a full temperature range. When the present temperature is in the high temperature range, the charging time in the high temperature range is calibrated by using a test method, that is, the calibrated cooling time. After charging continues from a high temperature to a normal temperature range, a block by block calculation method is adopted to group intervals with the same charging current at the normal temperature into one block, and the calibrated cooling time and the first target charging time at the normal temperature are summed to obtain the remaining charging time for the battery. Similarly, when the temperature is in the low temperature range, the charging time in the low temperature range is calibrated by using a test method, that is, the calibrated heating time. After charging continues from a low temperature to a normal temperature range, a block by block calculation method is adopted to group intervals with the same charging current at the normal temperature into one block, and the calibrated heating time and the second target charging time at the normal temperature are summed to obtain the remaining charging time for the battery. By using the calibrating method for a high or low temperature, accuracy of calculating the remaining charging time is improved.
FIG. 8 is a schematic structural diagram of an apparatus for calculating a remaining time of fast charging according to the third embodiment of the present invention. As shown in FIG. 8, the apparatus for calculating a remaining time of fast charging may further include a determining module 801 and a fourth obtaining module 802.
The determining module 801 is configured to determine whether the battery meets a final-stage charging condition before the first obtaining module 601 obtains the present temperature of the battery.
Further, operation of the first obtaining module 601 to obtain the present temperature of the battery includes: obtaining the present temperature of the battery when the battery does not meet the final-stage charging condition.
The fourth obtaining module 802 is configured to obtain a final-stage voltage follow-up time of the battery as the remaining charging time for the battery when the battery meets the final-stage charging condition.
As an optional implementation, operation of the fourth obtaining module 802 to obtain a final-stage voltage follow-up time of the battery as the remaining charging time for the battery when the battery meets the final-stage charging condition specifically includes:

obtaining a real-time voltage of the battery when the battery does not meet the final-stage charging condition; and
looking up a voltage follow-up time table according to the real-time voltage, to obtain a final-stage voltage follow-up time as the remaining charging time for the battery, wherein the voltage follow-up time table includes correspondence between a voltage and a final-stage voltage follow-up time.

Through the embodiment in FIG. 8, a final-stage voltage follow-up algorithm is adopted in the final charging

stage, and calculation of the remaining charging time is decoupled from the SOC and is only correlated with a monomer voltage, so as to ensure the final-stage calculation accuracy of the remaining charging time and achieve the objective of stable convergence.

FIG. 9 is a schematic structural diagram of a vehicle according to an embodiment of the present invention. As shown in FIG. 9, the vehicle may include:

memory 901 storing executable program code;
a processor 902 coupled to the memory 901, wherein
the processor 902 is configured to execute the executable program code stored in the memory 901 to execute any one of the methods for calculating a remaining time of fast charging provided in FIG. 1 to FIG. 5.

An embodiment of the present invention further provides a computer-readable storage medium having stored thereupon a computer program which, when executed, causes a computer to perform the methods for calculating a remaining time of fast charging provided in FIG. 1 to FIG. 5.

An embodiment of the present invention further provides a computer program product. The computer program product, when being run on a computer, enables the computer to perform some or all steps of any one of the methods provided in FIG. 1 to FIG. 5.

An embodiment of the present invention further provides an application release platform, which is used to release a computer program product. The computer program product, when being run on a computer, enables the computer to perform some or all steps of any one of the methods provided in FIG. 1 to FIG. 5.

A person of ordinary skill in the art would understand that all or some of the steps in each method of the foregoing embodiments may be implemented by a computer program instructing related hardware. The computer program may be stored in a computer readable storage medium. The storage medium may include a read-only memory (ROM), a random access memory (RAM), a programmable read-only memory (PROM), an erasable programmable read-only memory (EPROM), a one-time programmable read-only memory (OTPROM), an electrically erasable programmable read-only memory (EEPROM), a compact disc read-only memory (CD-ROM), or another optical disc memory, magnetic disk memory, magnetic tape memory, or any other computer-readable medium that can be used to carry or store data.

The method and apparatus for calculating a remaining time of fast charging, the vehicle, and the storage medium provided in the embodiments of the present invention are described in detail above. The principles and the implementations of the present invention are illustrated with reference to specific examples herein, and the description of the embodiments and examples is only to be used to assist understanding of the method and the core inventive concept of the present invention and not to be interpreted as limiting the scope of the present invention. In addition, in actual implementations of the invention, various modifications may be made by a person of ordinary skill in the art according to the inventive concept of the present invention, which nevertheless would fall in the scope of the present invention.

## Claims

**1.** A method for calculating a remaining time of fast charging, **characterized by**:

obtaining a present temperature of a battery;
when the present temperature is within a first temperature range, obtaining a remaining charging time for the battery according to a preset current MAP table and the present temperature;
when the present temperature is not within the first temperature range, obtaining a calibrated cooling/heating time and a target charging time, and summing the calibrated cooling/heating time and the target charging time to obtain the remaining charging time for the battery, wherein
the calibrated cooling time is obtained from a preset cooling time table and is a time required to cool the battery from the present temperature to a first temperature within the first temperature range, the calibrated heating time is obtained from a preset heating time table and is a time required to heat the battery from the present temperature to a second temperature within the first temperature range, and the target charging time is obtained according to the first temperature or the second temperature and the current MAP table.

**2.** The method according to claim 1, wherein said obtaining a calibrated cooling/heating time and a target charging time and summing the calibrated cooling/heating time and the target charging time to obtain a remaining charging time for the battery when the present temperature is not within the first temperature range comprises:

when the present temperature is within a second temperature range, looking up the cooling time table according to the present temperature for the calibrated cooling time required to cool the battery from the present temperature

to the first temperature, obtaining, based on the first temperature and the current MAP table, a first target charging time required after the battery is cooled from the present temperature to the first temperature, and summing the first target charging time and the calibrated cooling time to obtain the remaining charging time for the battery, wherein a minimum temperature of the second temperature range is greater than a maximum temperature of the first temperature range; or

when the present temperature is within a third temperature range, looking up the heating time table according to the present temperature for the calibrated heating time required to heat the battery from the present temperature to the second temperature, obtaining, based on the second temperature and the current MAP table, a second target charging time required after the battery is heated from the present temperature to the second temperature, and summing the second target charging time and the calibrated heating time to obtain the remaining charging time for the battery, wherein a maximum temperature of the third temperature range is less than a minimum temperature of the first temperature range.

**3.** The method according to claim 2, wherein the current MAP table comprises N temperature blocks, M voltage blocks, and request currents corresponding to P unit blocks respectively, each of the temperature blocks comprises at least one temperature interval, each of the voltage blocks comprises at least one voltage interval, each of the unit blocks comprises at least one unit interval, and request currents corresponding to all unit intervals in each of the unit blocks are equal, wherein P=N*M, and N, M, and P are positive integers.

**4.** The method according to claim 3, wherein said obtaining a remaining charging time for the battery according to a preset current MAP table and the present temperature when the present temperature is within a first temperature range comprises:

when the present temperature is within the first temperature range, obtaining, from the current MAP table and based on the present temperature, request currents respectively corresponding to n voltage blocks that have been gone through during a rise from a present voltage of the battery to a corresponding voltage when charging completes, to obtain n request currents, wherein n is a positive integer;

obtaining state of charge, SOC, variation amounts respectively corresponding to the n voltage blocks, to obtain n SOC variation amounts; and

obtaining the remaining charging time for the battery based on the n SOC variation amounts, the n request currents, a charging pile output current of the battery, an average current, and a rated capacity of the battery, wherein the average current is an actual current of the battery.

**5.** The method according to claim 4, wherein said obtaining the remaining charging time for the battery based on the n SOC variation amounts, the n request currents, a charging pile output current, an average current, and a rated capacity of the battery comprises:

calculating a first present charging time based on an SOC variation amount corresponding to the $1^{st}$ voltage block in the n voltage blocks, the rated capacity of the battery, the charging pile output current of the battery, the $1^{st}$ request current in the n request currents, and the average current;

when n = 1, using the first present charging time as the remaining charging time for the battery; and

when $n \geq 2$, calculating an $i^{th}$ first subsequent charging time, based on an SOC variation amount corresponding to the $i^{th}$ voltage block in the n voltage blocks, the rated capacity of the battery, the charging pile output current of the battery, and an $i^{th}$ request current in the n request currents, to obtain n-1 first subsequent charging times, and summing the first present charging time and the n-1 first subsequent charging times, to obtain the remaining charging time for the battery, wherein $2 \leq i \leq n$.

**6.** The method according to claim 4 or 5, wherein said obtaining, based on the first temperature and the current MAP table, a first target charging time required after the battery is cooled from the present temperature to the first temperature comprises:

obtaining a first voltage of the battery when cooled from the present temperature to the first temperature and a cooling SOC variation amount during the cooling;

obtaining, from the current MAP table and based on the first temperature, request currents respectively corresponding to m voltage blocks that have been gone through during a rise from the first voltage to the corresponding voltage when charging completes, to obtain m request currents, wherein m is a positive integer;

obtaining SOC variation amounts respectively corresponding to the m voltage blocks, to obtain m SOC variation amounts; and

obtaining, based on the cooling SOC variation amount, the m SOC variation amounts, the m request currents, the charging pile output current of the battery, the average current, and the rated capacity of the battery, the first target charging time required after the battery is cooled from the present temperature to the first temperature.

7. The method according to claim 4 or 5, wherein said obtaining, based on the second temperature and the current MAP table, a second target charging time required after the battery is heated from the present temperature to the second temperature comprises:

obtaining a second voltage of the battery when heated from the present temperature to the second temperature and a heating SOC variation amount during the heating;
obtaining, from the current MAP table and based on the second temperature, request currents respectively corresponding to p voltage blocks that have been gone through during a rise from the second voltage to the corresponding voltage when charging completes, to obtain p request currents, wherein p is a positive integer;
obtaining SOC variation amounts respectively corresponding to the p voltage blocks, to obtain p SOC variation amounts; and
obtaining, based on the heating SOC variation amount, the p SOC variation amounts, the p request currents, the charging pile output current of the battery, the average current, and the rated capacity of the battery, the second target charging time required after the battery is heated from the present temperature to the second temperature.

8. The method according to any one of claims 1 to 7, further comprising, before said obtaining a present temperature of a battery:

determining whether the battery meets a final-stage charging condition, wherein
said obtaining a present temperature of a battery comprises:
obtaining the present temperature of the battery when the battery does not meet the final-stage charging condition.

9. The method according to claim 8, comprising:
obtaining a final-stage voltage follow-up time of the battery as the remaining charging time for the battery when the battery meets the final-stage charging condition.

10. The method according to claim 9, wherein said obtaining a final-stage voltage follow-up time of the battery as the remaining charging time for the battery when the battery meets the final-stage charging condition comprises:

obtaining a real-time voltage of the battery when the battery meets the final-stage charging condition; and
looking up a voltage follow-up time table according to the real-time voltage, to obtain a final-stage voltage follow-up time as the remaining charging time for the battery, wherein the voltage follow-up time table comprises correspondence between a voltage and a final-stage voltage follow-up time.

11. An apparatus for calculating a remaining time of fast charging, **characterized by**:

a first obtaining module, configured to obtain a present temperature of a battery;
a second obtaining module, configured to obtain a remaining charging time for the battery according to a preset current MAP table and the present temperature when the present temperature is within a first temperature range; and
a third obtaining module, configured to, when the present temperature is not within the first temperature range, obtain a calibrated cooling/heating time and a target charging time, and sum the calibrated cooling/heating time and the target charging time to obtain the remaining charging time for the battery, wherein
the calibrated cooling time is obtained from a preset cooling time table and is a time required to cool the battery from the present temperature to a first temperature within the first temperature range, the calibrated heating time is obtained from a preset heating time table and is a time required to heat the battery from the present temperature to a second temperature within the first temperature range, and the target charging time is obtained according to the first temperature or the second temperature and the current MAP table.

12. A vehicle, comprising:

memory storing executable program code; and

a processor coupled to the memory, wherein
the processor is configured to execute the executable program code stored in the memory, to perform the method for calculating a remaining time of fast charging according to any one of claims 1 to 10.

**13.** A computer-readable storage medium having stored thereupon a computer program which, when executed by a processor, results in performance of the steps of the method according to any one of claims 1 to 10.

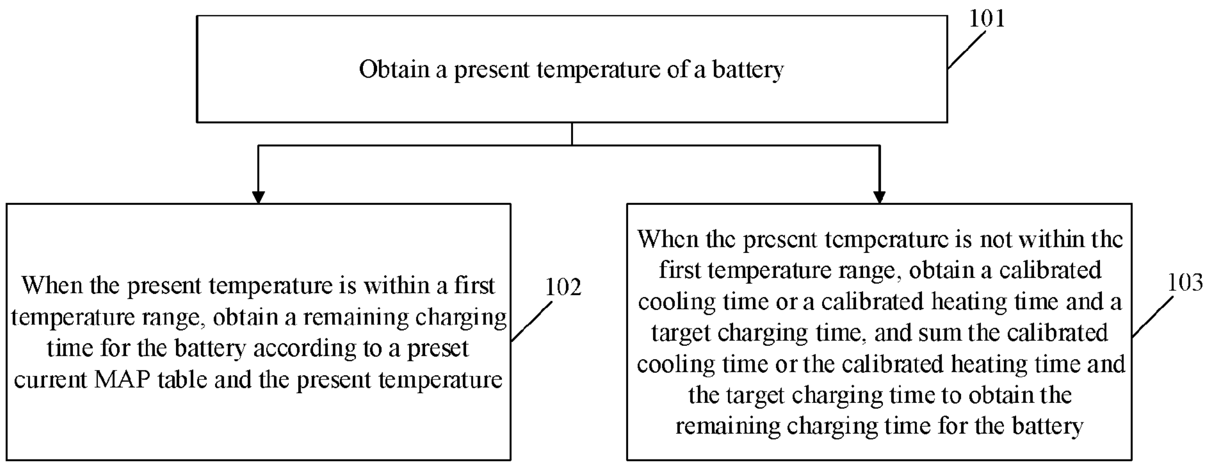
101
Obtain a present temperature of a battery
102
When the present temperature is within a first temperature range, obtain a remaining charging time for the battery according to a preset current MAP table and the present temperature
103
When the present temperature is not within the first temperature range, obtain a calibrated cooling time or a calibrated heating time and a target charging time, and sum the calibrated cooling time or the calibrated heating time and the target charging time to obtain the remaining charging time for the battery

FIG. 1

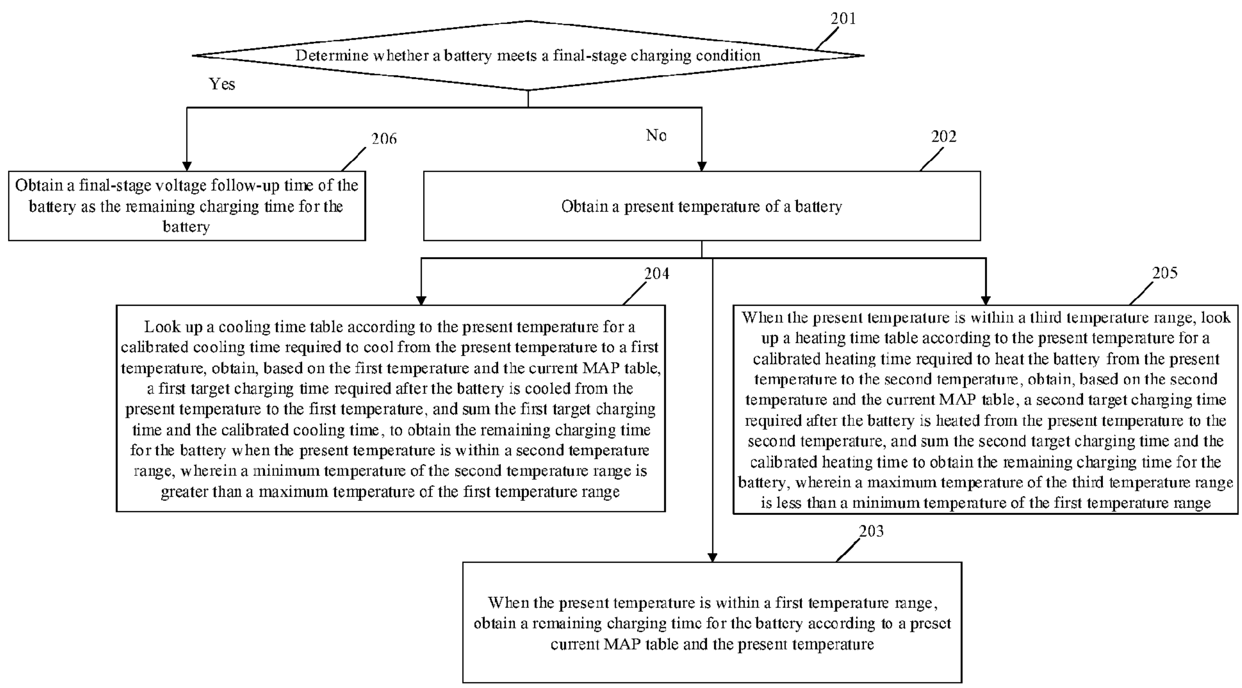
201
Determine whether a battery meets a final-stage charging condition
Yes
206
Obtain a final-stage voltage follow-up time of the battery as the remaining charging time for the battery
No
202
Obtain a present temperature of a battery
204
Look up a cooling time table according to the present temperature for a calibrated cooling time required to cool from the present temperature to a first temperature, obtain, based on the first temperature and the current MAP table, a first target charging time required after the battery is cooled from the present temperature to the first temperature, and sum the first target charging time and the calibrated cooling time, to obtain the remaining charging time for the battery when the present temperature is within a second temperature range, wherein a minimum temperature of the second temperature range is greater than a maximum temperature of the first temperature range
205
When the present temperature is within a third temperature range, look up a heating time table according to the present temperature for a calibrated heating time required to heat the battery from the present temperature to the second temperature, obtain, based on the second temperature and the current MAP table, a second target charging time required after the battery is heated from the present temperature to the second temperature, and sum the second target charging time and the calibrated heating time to obtain the remaining charging time for the battery, wherein a maximum temperature of the third temperature range is less than a minimum temperature of the first temperature range
203
When the present temperature is within a first temperature range, obtain a remaining charging time for the battery according to a preset current MAP table and the present temperature

FIG. 2

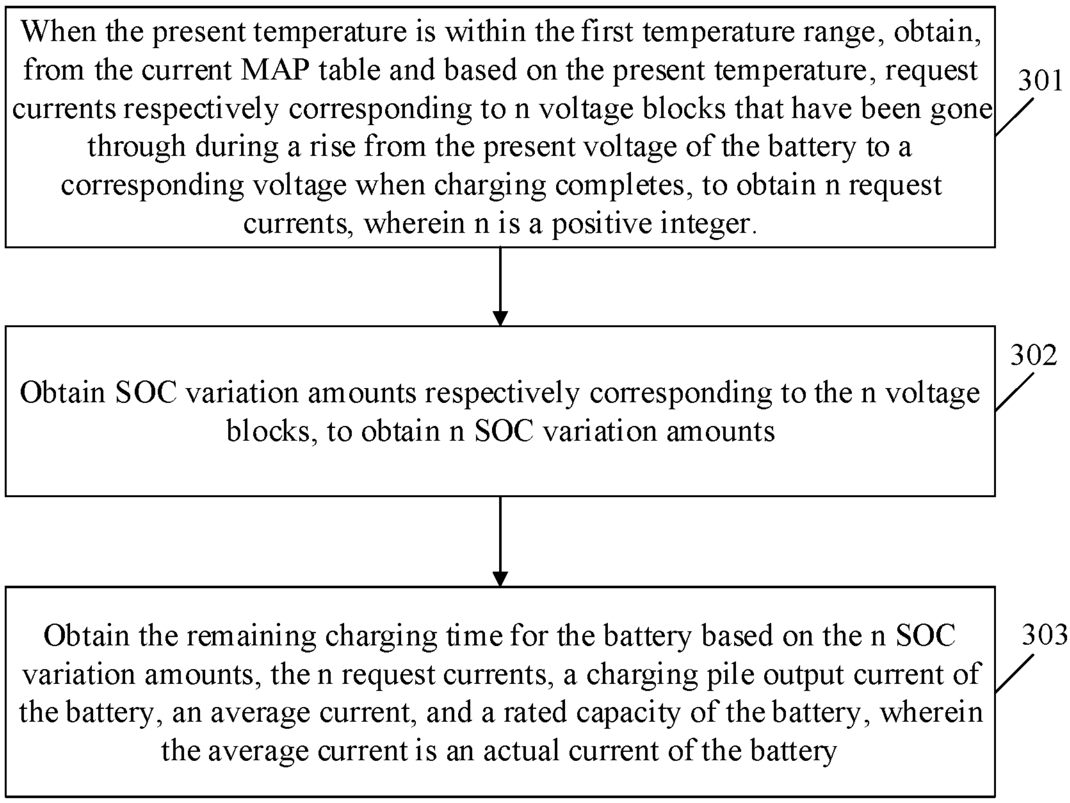
When the present temperature is within the first temperature range, obtain, from the current MAP table and based on the present temperature, request currents respectively corresponding to n voltage blocks that have been gone through during a rise from the present voltage of the battery to a corresponding voltage when charging completes, to obtain n request currents, wherein n is a positive integer.
301
Obtain SOC variation amounts respectively corresponding to the n voltage blocks, to obtain n SOC variation amounts
302
Obtain the remaining charging time for the battery based on the n SOC variation amounts, the n request currents, a charging pile output current of the battery, an average current, and a rated capacity of the battery, wherein the average current is an actual current of the battery
303

FIG. 3

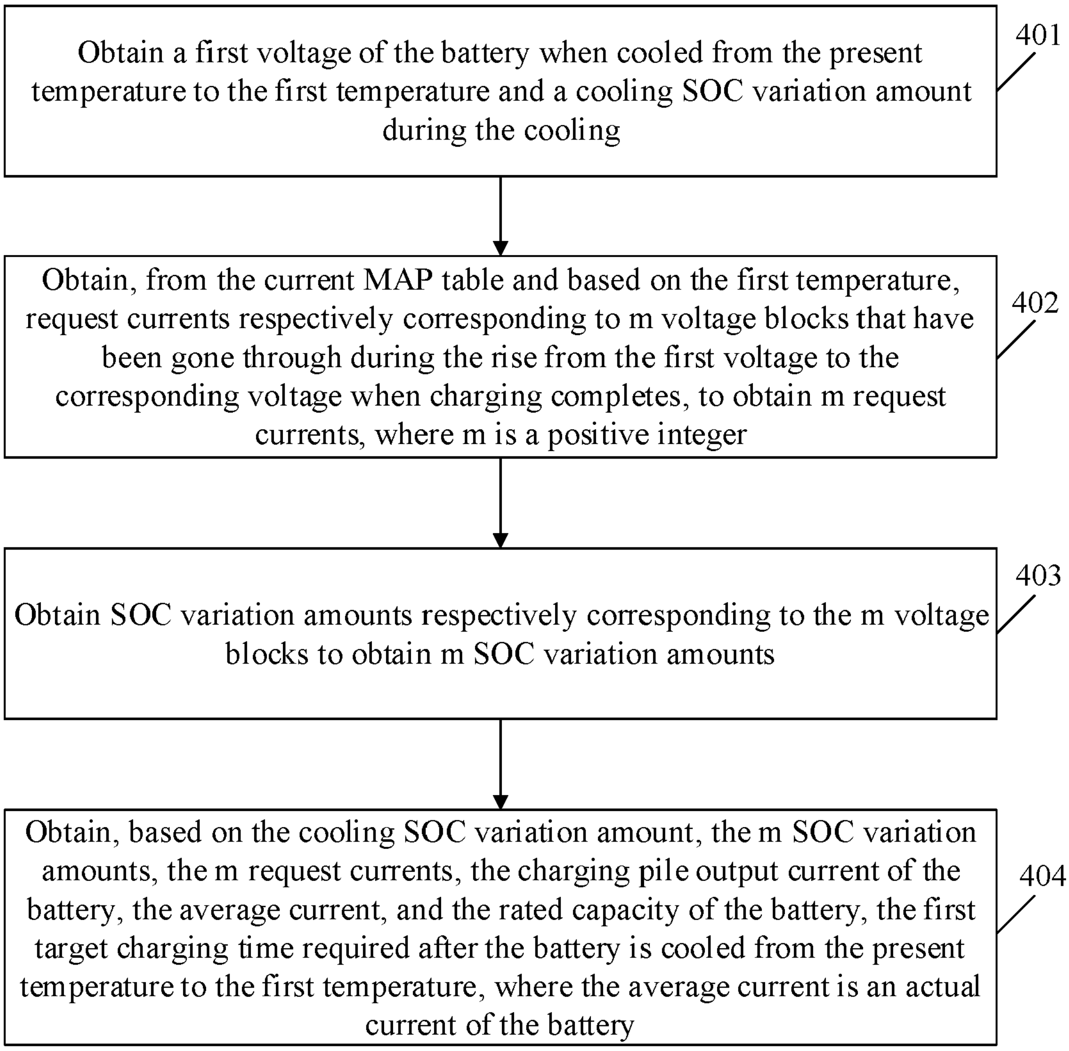
Obtain a first voltage of the battery when cooled from the present temperature to the first temperature and a cooling SOC variation amount during the cooling
401
Obtain, from the current MAP table and based on the first temperature, request currents respectively corresponding to m voltage blocks that have been gone through during the rise from the first voltage to the corresponding voltage when charging completes, to obtain m request currents, where m is a positive integer
402
Obtain SOC variation amounts respectively corresponding to the m voltage blocks to obtain m SOC variation amounts
403
Obtain, based on the cooling SOC variation amount, the m SOC variation amounts, the m request currents, the charging pile output current of the battery, the average current, and the rated capacity of the battery, the first target charging time required after the battery is cooled from the present temperature to the first temperature, where the average current is an actual current of the battery
404

FIG. 4

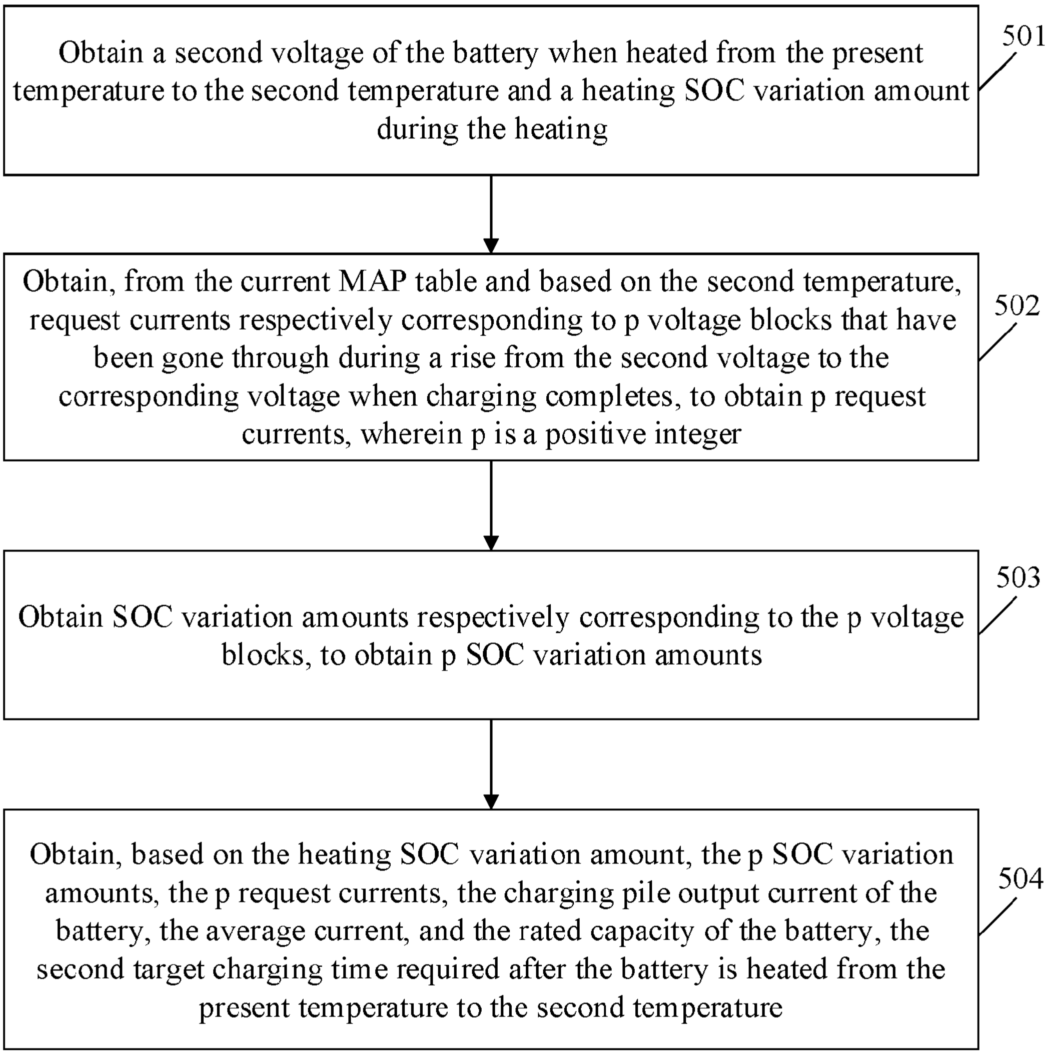
Obtain a second voltage of the battery when heated from the present temperature to the second temperature and a heating SOC variation amount during the heating
501
Obtain, from the current MAP table and based on the second temperature, request currents respectively corresponding to p voltage blocks that have been gone through during a rise from the second voltage to the corresponding voltage when charging completes, to obtain p request currents, wherein p is a positive integer
502
Obtain SOC variation amounts respectively corresponding to the p voltage blocks, to obtain p SOC variation amounts
503
Obtain, based on the heating SOC variation amount, the p SOC variation amounts, the p request currents, the charging pile output current of the battery, the average current, and the rated capacity of the battery, the second target charging time required after the battery is heated from the present temperature to the second temperature
504

FIG. 5

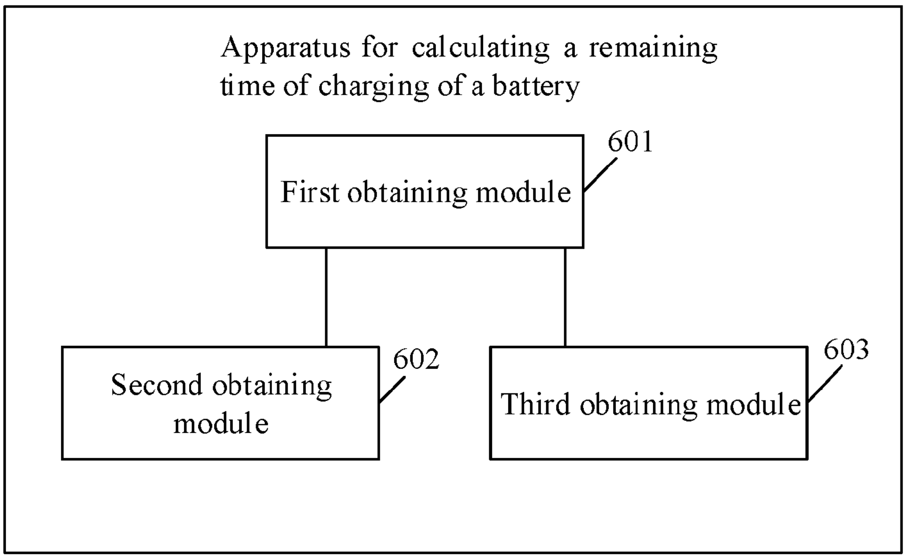
Apparatus for calculating a remaining time of charging of a battery
First obtaining module
601
Second obtaining module
602
Third obtaining module
603

FIG. 6

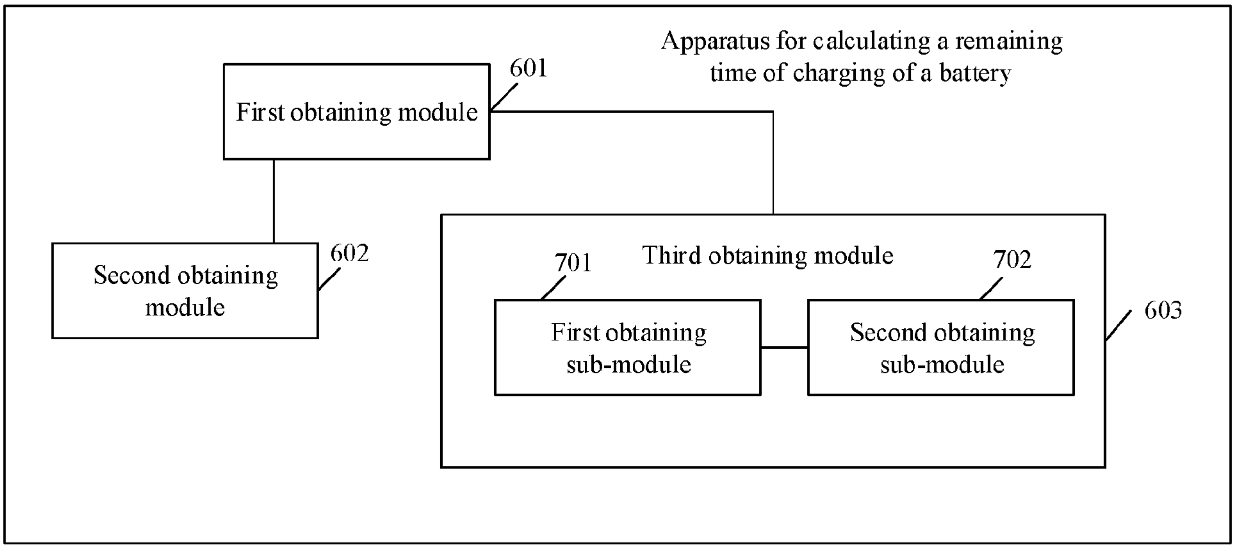
Apparatus for calculating a remaining time of charging of a battery
601
First obtaining module
602
Second obtaining module
Third obtaining module
701
702
603
First obtaining sub-module
Second obtaining sub-module

FIG. 7

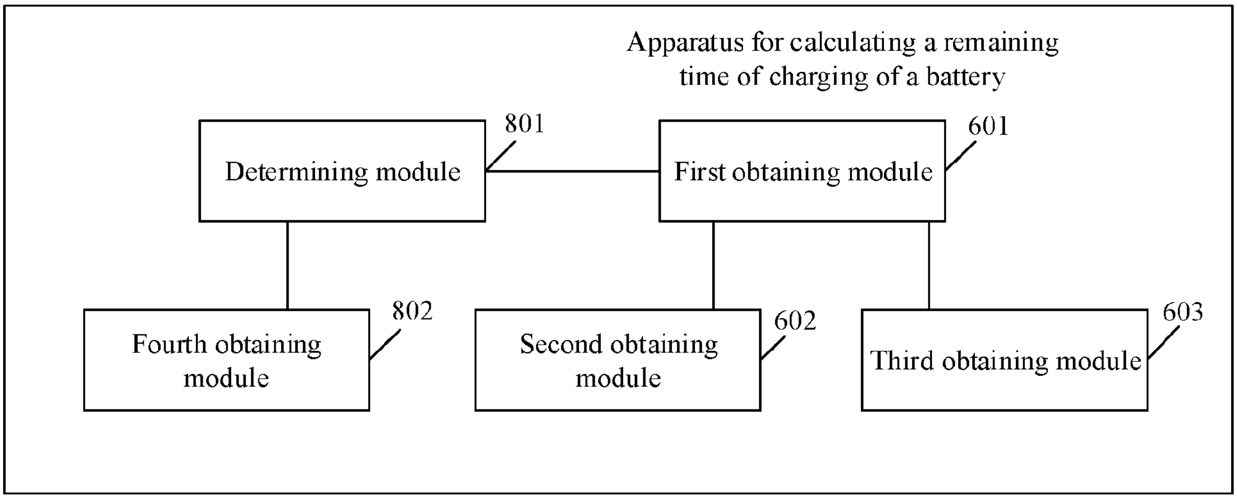
Apparatus for calculating a remaining time of charging of a battery
801
Determining module
601
First obtaining module
802
Fourth obtaining module
602
Second obtaining module
603
Third obtaining module

FIG. 8

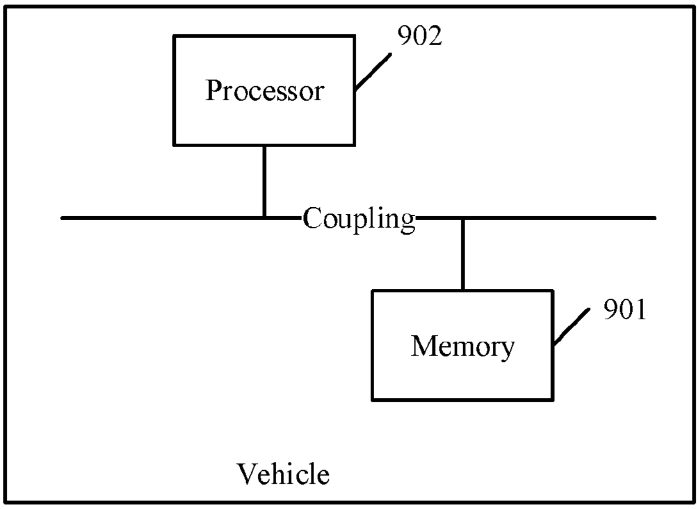


FIG. 9

| Voltage / Temperature | 3.190 | 3.681 | 3.750 | 3.799 | 3.848 | 3.905 | 3.977 | 4.024 | 4.047 | 4.055 | 4.129 | 4.137 | 4.150 | 4.160 |
|---|---|---|---|---|---|---|---|---|---|---|---|---|---|---|
| 20℃ ≤ V < 25℃ | 242.40 | 242.40 | 242.40 | 242.40 | 242.40 | 242.40 | 242.40 | 197.96 | 197.96 | 165.64 | 165.64 | 82.82 | 82.82 | 20.20 |
| 25℃ ≤ V < 35℃ | 250.00 | 250.00 | 250.00 | 250.00 | 250.00 | 250.00 | 250.00 | 250.00 | 242.40 | 242.40 | 202.00 | 202.00 | 101.00 | 20.20 |

FIG. 10

| Voltage / Temperature | 3.190 | 3.681 | 3.750 | 3.799 | 3.848 | 3.905 | 3.977 | 4.024 | 4.047 | 4.055 | 4.129 | 4.137 | 4.150 | 4.160 |
|---|---|---|---|---|---|---|---|---|---|---|---|---|---|---|
| 20℃ ≤ V < 25℃ | 250.00 | 250.00 | 250.00 | 250.00 | 250.00 | 250.00 | 250.00 | 250.00 | 242.40 | 242.40 | 202.00 | 202.00 | 101.00 | 20.20 |
| 25℃ ≤ V < 35℃ | 250.00 | 250.00 | 250.00 | 250.00 | 250.00 | 250.00 | 250.00 | 250.00 | 242.40 | 242.40 | 202.00 | 202.00 | 101.00 | 20.20 |

FIG. 11

Europäisches Patentamt
European Patent Office
Office européen des brevets

# EUROPEAN SEARCH REPORT

Application Number
EP 21 20 4706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 393 368 B (BEIJING HYUNDAI MOTOR CO CORP) 21 August 2018 (2018-08-21) | 1,11-13 | INV. B60L53/62 B60L58/27 |
| A | * the whole document * | 2-10 | |
| A | US 2018/170208 A1 (PARK SEON YOUNG [KR]) 21 June 2018 (2018-06-21) * paragraph [0056] - paragraph [0070]; figure 4 * | 1-13 | |
| A | CN 108 646 190 A (NINGDE CONTEMPORARY AMPEREX TECH CO LTD) 12 October 2018 (2018-10-12) * the whole document * | 1-13 | |
| A | US 2016/332533 A1 (TISTLE CATHLEEN [US] ET AL) 17 November 2016 (2016-11-17) * paragraph [0009] - paragraph [0024]; figures 1-3 * | 1,11 | |
| A | EP 2 930 820 A1 (PANASONIC IP MAN CO LTD [JP]) 14 October 2015 (2015-10-14) * paragraph [0041] - paragraph [0053]; figures 3-5 * | 1,11 | TECHNICAL FIELDS SEARCHED (IPC) B60L |

The present search report has been drawn up for all claims

2

| Place of search | Date of completion of the search | Examiner |
|---|---|---|
| The Hague | 24 April 2022 | Degraeve, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 21 20 4706

This annex lists the patent family members relating to the patent documents cited in the above-mentioned European search report. The members are as contained in the European Patent Office EDP file on
The European Patent Office is in no way liable for these particulars which are merely given for the purpose of information.

24-04-2022

| Patent document cited in search report | | Publication date | Patent family member(s) | | | Publication date |
|---|---|---|---|---|---|---|
| CN 104393368 | B | 21-08-2018 | NONE | | | |
| US 2018170208 | A1 | 21-06-2018 | KR | 20180070889 | A | 27-06-2018 |
| | | | US | 2018170208 | A1 | 21-06-2018 |
| CN 108646190 | A | 12-10-2018 | NONE | | | |
| US 2016332533 | A1 | 17-11-2016 | CN | 106160065 | A | 23-11-2016 |
| | | | US | 2016332533 | A1 | 17-11-2016 |
| | | | US | 2018037133 | A1 | 08-02-2018 |
| EP 2930820 | A1 | 14-10-2015 | EP | 2930820 | A1 | 14-10-2015 |
| | | | JP | 2014113006 | A | 19-06-2014 |
| | | | US | 2015291044 | A1 | 15-10-2015 |
| | | | WO | 2014087580 | A1 | 12-06-2014 |

EPO FORM P0459

For more details about this annex : see Official Journal of the European Patent Office, No. 12/82